# EUROPEAN PATENT SPECIFICATION

(11) **EP 3 917 043 B1**
(45) Date of publication and mention of the grant of the patent: **01.01.2025**
(21) Application number: 19916582.0
(22) Date of filing: 25.02.2019
(51) Int. Cl.: H04J 3/06

(54) **TIME SYNCHRONIZATION METHOD, APPARATUS AND SYSTEM**
ZEITSYNCHRONISIERUNGSVERFAHREN, -VORRICHTUNG UND -SYSTEM
PROCÉDÉ, APPAREIL ET SYSTÈME DE SYNCHRONISATION TEMPORELLE

(43) Date of publication of application: 01.12.2021
(73) Proprietor: Huawei Technologies Co., Ltd., Shenzhen, Guangdong 518129 (CN)
(72) Inventor: LIAO, Jinqiu, Shenzhen, Guangdong 518129 (CN); LIU, Cui, Shenzhen, Guangdong 518129 (CN); XU, Jianbo, Shenzhen, Guangdong 518129 (CN)
(74) Representative: MERH-IP Matias Erny Reichl Hoffmann Patentanwälte PartG mbB
(86) International application number: PCT/CN2019/076041
(87) International publication number: WO 2020/172766

(56) References cited:
- EP-A1- 2 731 303
- CN-A- 101 478 358
- CN-A- 101 827 098
- CN-A- 102 111 380
- CN-A- 102 143 571
- US-A1- 2016 105 341
- US-B2- 8 179 924
- EXEL REINHARD: "Mitigation of Asymmetric Link Delays in IEEE 1588 Clock Synchronization Systems", IEEE COMMUNICATIONS LETTERS, IEEE SERVICE CENTER, PISCATAWAY, NJ, US, vol. 18, no. 3, 1 March 2014 (2014-03-01), pages 507 - 510, XP011544857, ISSN: 1089-7798, [retrieved on 20140408], DOI: 10.1109/LCOMM.2014.012214.132540

## Description

### TECHNICAL FIELD

This application relates to the field of communications technologies, and in particular, to a time synchronization method, an apparatus, and a system.

### BACKGROUND

The 1588 protocol, also referred to as the precision time protocol (precision time protocol, PTP), provides a set of time synchronization solutions. The following briefly describes a working principle of the 1588 protocol to implement time synchronization.

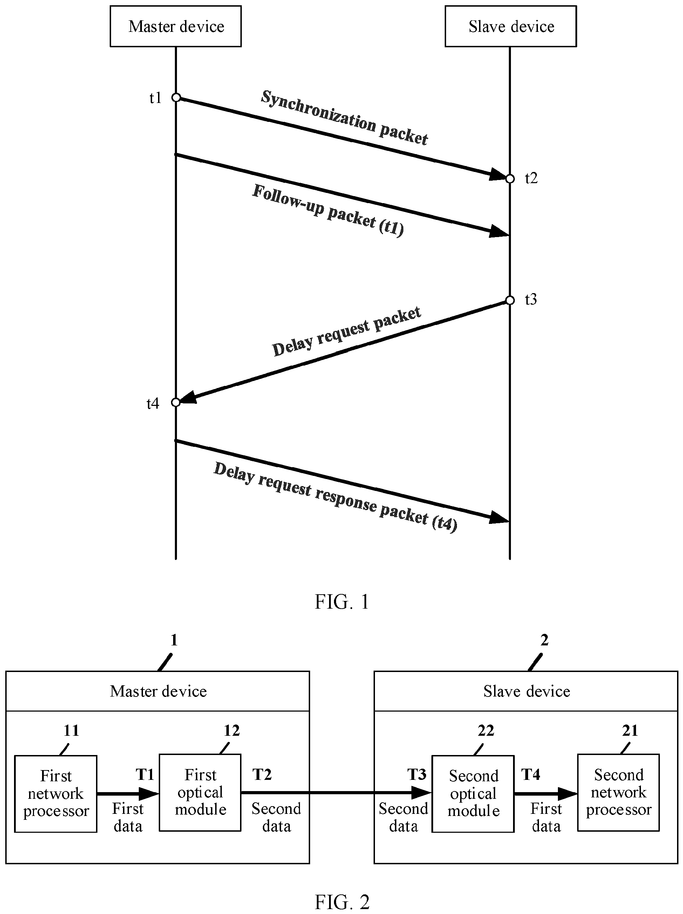

FIG. 1 is a flowchart of a processing process of implementing the time synchronization in the 1588 protocol.

Step 1: A master device sends a synchronization packet to a slave device, and the master device records a precision sending timestamp t1 at which the synchronization packet leaves the master device.

Step 2: The master device encapsulates t1 into a follow-up packet, and the master device sends, to the slave device, the follow-up packet carrying t1.

Step 3: When the slave device receives the synchronization packet sent by the master device, the slave device records a precision arrival timestamp t2 at which the synchronization packet arrives at the slave device.

Step 4: The slave device sends a latency request packet to the master device, and the slave device records a precision sending timestamp t3 of the latency request packet.

Step 5: When the master device receives the latency request packet sent by the slave device, the master device records a precision arrival timestamp t4 at which the latency request packet arrives at the master device.

Step 6: The master device encapsulates t4 into a latency request response packet, and sends, to the slave device, the latency request response packet carrying t4.

In this case, the slave device obtains four times: t1, t2, t3, and t4, where t2 - t1 = downlink transmission latency + time offset, t4 - t3 = uplink transmission latency - time offset. Therefore, (t2 - 11) - (t4 - t3) = (downlink transmission latency + time offset) - (uplink transmission latency - time offset) = (downlink transmission latency - uplink transmission latency) + 2 x time offset. In the 1588 protocol, the downlink transmission latency is considered as the same as the uplink transmission latency. In this case, downlink transmission latency - uplink transmission latency = 0. Therefore, the time offset is [(t2 - 11) - (t4 - t3)] ÷ 2. After the slave device calculates the time offset based on t1, t2, t3, and t4, the slave device may use the time offset to correct local time, to ensure that local time of the slave device is the same as local time of the master device.

However, in an actual scenario, due to internal reasons of an optical module of the master device and an optical module of the slave device, the downlink transmission latency may be different from the uplink transmission latency. Consequently, a time offset obtained by using the conventional technology may be inaccurate, and it cannot be ensured that the local time of the slave device is synchronized with the local time of the master device.

Document Excel Reinhard: "Mitigation of Asymmetric Link delays in IEEE 1588 Clock Synchronization Systems", 1 March 2014 discloses various asymmetry mitigation measures for IEEE 1588 clock synchronization systems.

### SUMMARY

Embodiments of the present invention are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention. This application provides a time synchronization method, an apparatus, and a system, to measure a time offset between a slave device and a master device in a more precise manner, so that the slave device can be synchronized with the master device by using the time offset.

According to a first aspect, a time synchronization method is provided. The method is applied to a slave device, and the slave device is synchronized with a master device. The master device includes a first optical module and a first network processor, and the slave device includes a second optical module and a second network processor. The method includes: The slave device calculates a first unidirectional latency, where the first unidirectional latency is used to indicate a sum of a sending latency of the first optical module and a receiving latency of the second optical module; the slave device calculates a second unidirectional latency, where the second unidirectional latency is used to indicate a sum of a sending latency of the second optical module and a receiving latency of the first optical module; the slave device calculates a difference between the first unidirectional latency and the second unidirectional latency to obtain a bidirectional latency difference; the slave device calculates a time offset between the slave device and the master device based on the bidirectional latency difference, a first sending timestamp, a first receiving timestamp, a second sending timestamp, and a second receiving timestamp, where the first sending timestamp is a timestamp that is recorded by the master device and at which the first network processor sends a synchronization packet, the first receiving timestamp is a timestamp that is recorded by the slave device and at which the second network processor receives the synchronization packet, the second sending timestamp is a timestamp that is recorded by the slave device and at which the second network processor sends a latency request packet, and the second receiving timestamp is a timestamp that is recorded by the master device and at which the first network processor receives the latency request packet; and the slave device adjusts local time of the slave device by using the time offset.
In the first aspect, in a process of calculating the time offset, because the first unidirectional latency is different from the second unidirectional latency, the slave device needs to measure the bidirectional latency difference, and calculate the time offset between the slave device and the master device based on the bidirectional latency difference, the first sending timestamp, the first receiving timestamp, the second sending timestamp, and the second receiving timestamp, and the slave device adjusts the local time of the slave device by using the time offset. In this embodiment of this application, the time offset between the slave device and the master device is measured in a more precise manner, to ensure that the local time of the slave device is synchronized with local time of the master device.

In a possible implementation, that the slave device calculates a first unidirectional latency includes: The slave device receives a first difference sent by the master device, where the first difference is a difference between a first timestamp and a second timestamp, the first timestamp is a timestamp that is recorded by the master device and at which the first optical module receives first data, and the second timestamp is a timestamp that is recorded by the master device and at which the first optical module outputs second data; the slave device records a third timestamp at which the second optical module receives the second data; the slave device records a fourth timestamp at which the second optical module outputs the first data; the slave device calculates a difference between the fourth timestamp and the third timestamp to obtain a second difference; and the slave device calculates a difference between the second difference and the first difference to obtain the first unidirectional latency. The first unidirectional latency is the sum of the sending latency of the first optical module and the receiving latency of the second optical module, and the difference between the second difference and the first difference is equal to the sum of the sending latency of the first optical module and the receiving latency of the second optical module. Therefore, after the slave device obtains the first difference and the second difference, the slave device can calculate the first unidirectional latency by using the first difference and the second difference.

In a possible implementation, that the slave device calculates a second unidirectional latency includes: The slave device records a fifth timestamp at which the second optical module receives third data; the slave device records a sixth timestamp at which the second optical module outputs fourth data; the slave device calculates a difference between the fifth timestamp and the sixth timestamp to obtain a third difference; the slave device receives a fourth difference sent by the master device, where the fourth difference is a difference between an eighth timestamp and a seventh timestamp, the seventh timestamp is a timestamp that is recorded by the master device and at which the first optical module receives the fourth data, and the eighth timestamp is a timestamp that is recorded by the master device and at which the first optical module outputs the third data; and the slave device calculates a difference between the fourth difference and the third difference to obtain the second unidirectional latency. The second unidirectional latency is the sum of the sending latency of the second optical module and the receiving latency of the first optical module, and the difference between the fourth difference and the third difference is equal to the sum of the sending latency of the second optical module and the receiving latency of the first optical module. Therefore, after the slave device obtains the third difference and the fourth difference, the slave device can calculate the second unidirectional latency by using the third difference and the fourth difference.

In a possible implementation, that the slave device calculates a first unidirectional latency includes: The slave device receives a first difference sent by the master device, where the first difference is a difference between a first timestamp and a second timestamp, the first timestamp is a timestamp that is recorded by the master device and at which the first optical module receives first data, and the second timestamp is a timestamp that is recorded by the master device and at which the first optical module outputs the first data; the slave device records a third timestamp at which the second optical module receives the first data; the slave device records a fourth timestamp at which the second optical module outputs the first data; the slave device calculates a difference between a fourth timestamp and a third timestamp to obtain a second difference; and the slave device calculates a difference between the second difference and the first difference to obtain the first unidirectional latency. The first unidirectional latency is the sum of the sending latency of the first optical module and the receiving latency of the second optical module, and the difference between the second difference and the first difference is equal to the sum of the sending latency of the first optical module and the receiving latency of the second optical module. Therefore, after the slave device obtains the first difference and the second difference, the slave device can calculate the first unidirectional latency by using the first difference and the second difference.

In a possible implementation, that the slave device calculates a second unidirectional latency includes: The slave device records a fifth timestamp at which the second optical module receives second data; the slave device records a sixth timestamp at which the second optical module outputs the second data; the slave device calculates a difference between the fifth timestamp and the sixth timestamp to obtain a third difference; the slave device receives a fourth difference sent by the master device, where the fourth difference is a difference between an eighth timestamp and a seventh timestamp, the seventh timestamp is a timestamp that is recorded by the master device and at which the first optical module receives the second data, and the eighth timestamp is a timestamp that is recorded by the master device and at which the first optical module outputs the second data; and the slave device calculates a difference between the fourth difference and the third difference to obtain the second unidirectional latency. The second unidirectional latency is the sum of the sending latency of the second optical module and the receiving latency of the first optical module, and the difference between the fourth difference and the third difference is equal to the sum of the sending latency of the second optical module and the receiving latency of the first optical module. Therefore, after the slave device obtains the third difference and the fourth difference, the slave device can calculate the second unidirectional latency by using the third difference and the fourth difference.

In a possible implementation, that the slave device calculates a time offset between the slave device and the master device based on the bidirectional latency difference, a first sending timestamp, a first receiving timestamp, a second sending timestamp, and a second receiving timestamp includes: The slave device calculates the time offset between the slave device and the master device according to [(t2 - 11) - (t4 - t3) - Δlatency] ÷ 2, where t1 is the first sending timestamp, t2 is the first receiving timestamp, t3 is the second sending timestamp, t4 is the second receiving timestamp, and Δlatency is the bidirectional latency difference. t2 - t1 represents a sum of a downlink transmission latency and the time offset, and t4 - t3 represents a sum of an uplink transmission latency and the time offset. Therefore, (t2 - 11) - (t4 - t3) = (downlink transmission latency + time offset) - (uplink transmission latency - time offset) = (downlink transmission latency - uplink transmission latency) + 2 x time offset. Because (downlink transmission latency - uplink transmission latency) is equal to the difference Δlatency between the first unidirectional latency and the second unidirectional latency, the time offset is equal to [(t2 - t1) - (t4 - t3) - Δlatency] ÷ 2. After the slave device obtains the bidirectional latency difference, the first sending timestamp, the first receiving timestamp, the second sending timestamp, and the second receiving timestamp, the slave device can calculate the time offset between the slave device and the master device according to the formula [(t2 - t1) - (t4 - t3) - Δlatency] ÷ 2.

In a possible implementation, that the slave device calculates a first unidirectional latency includes: The slave device records a third timestamp at which the second optical module receives second data; the slave device records a fourth timestamp at which the second optical module outputs first data; the slave device calculates a difference between a fourth timestamp and a third timestamp to obtain a second difference; the slave device sends the second difference to the master device; and the slave device receives the first unidirectional latency sent by the master device, where the first unidirectional latency is a difference between the second difference and a first difference. The first difference is a difference between a first timestamp and a second timestamp. The first timestamp is a timestamp that is recorded by the master device and at which the first optical module receives the first data, and the second timestamp is a timestamp that is recorded by the master device and at which the first optical module outputs the second data. The first unidirectional latency is the sum of the sending latency of the first optical module and the receiving latency of the second optical module, and the difference between the second difference and the first difference is equal to the sum of the sending latency of the first optical module and the receiving latency of the second optical module. Therefore, after the master device obtains the first difference and the second difference, the master device can calculate the first unidirectional latency by using the first difference and the second difference. After the master device calculates the first unidirectional latency, the master device sends the first unidirectional latency to the slave device.

In a possible implementation, that the slave device calculates a second unidirectional latency includes: The slave device records a fifth timestamp at which the second optical module receives third data; the slave device records a sixth timestamp at which the second optical module outputs fourth data; the slave device calculates a difference between the fifth timestamp and the sixth timestamp to obtain a third difference; the slave device sends the third difference to the master device; and the slave device receives the second unidirectional latency sent by the master device, where the second unidirectional latency is a difference between a fourth difference and the third difference. The fourth difference is a difference between an eighth timestamp and a seventh timestamp. The seventh timestamp is a timestamp that is recorded by the master device and at which the first optical module receives the fourth data, and the eighth timestamp is a timestamp that is recorded by the master device and at which the first optical module outputs the third data. The second unidirectional latency is the sum of the sending latency of the second optical module and the receiving latency of the first optical module, and the difference between the fourth difference and the third difference is equal to the sum of the sending latency of the second optical module and the receiving latency of the first optical module. Therefore, after the master device obtains the third difference and the fourth difference, the master device can calculate the second unidirectional latency by using the third difference and the fourth difference. After the master device calculates the second unidirectional latency, the master device sends the second unidirectional latency to the slave device.

In a possible implementation, that the slave device calculates a first unidirectional latency includes: The slave device records a third timestamp at which the second optical module receives first data; the slave device records a fourth timestamp at which the second optical module outputs the first data; the slave device calculates a difference between the fourth timestamp and the third timestamp to obtain a second difference; the slave device sends the second difference to the master device; and the slave device receives the first unidirectional latency sent by the master device, where the first unidirectional latency is a difference between the second difference and a first difference. The first difference is a difference between a first timestamp and a second timestamp. The first timestamp is a timestamp that is recorded by the master device and at which the first optical module receives the first data, and the second timestamp is a timestamp that is recorded by the master device and at which the first optical module outputs the first data. The first unidirectional latency is the sum of the sending latency of the first optical module and the receiving latency of the second optical module, and the difference between the second difference and the first difference is equal to the sum of the sending latency of the first optical module and the receiving latency of the second optical module. Therefore, after the master device obtains the first difference and the second difference, the master device can calculate the first unidirectional latency by using the first difference and the second difference. After the master device calculates the first unidirectional latency, the master device sends the first unidirectional latency to the slave device.

In a possible implementation, that the slave device calculates a second unidirectional latency includes: The slave device records a fifth timestamp at which the second optical module receives second data; the slave device records a sixth timestamp at which the second optical module outputs the second data; the slave device calculates a difference between the fifth timestamp and the sixth timestamp to obtain a third difference; the slave device sends the third difference to the master device; and the slave device receives the second unidirectional latency sent by the master device, where the second unidirectional latency is a difference between a fourth difference and the third difference. The fourth difference is a difference between an eighth timestamp and a seventh timestamp. The seventh timestamp is a timestamp that is recorded by the master device and at which the first optical module receives the second data, and the eighth timestamp is a timestamp that is recorded by the master device and at which the first optical module outputs the second data. The second unidirectional latency is the sum of the sending latency of the second optical module and the receiving latency of the first optical module, and the difference between the fourth difference and the third difference is equal to the sum of the sending latency of the second optical module and the receiving latency of the first optical module. Therefore, after the master device obtains the third difference and the fourth difference, the master device can calculate the second unidirectional latency by using the third difference and the fourth difference. After the master device calculates the second unidirectional latency, the master device sends the second unidirectional latency to the slave device.

According to a second aspect, a slave device is provided, and the slave device is synchronized with a master device. The master device includes a first network processor and a first optical module, and the slave device includes a second network processor, a second optical module, and a measurement module. The measurement module is configured to calculate a first unidirectional latency, where the first unidirectional latency is used to indicate a sum of a sending latency of the first optical module and a receiving latency of the second optical module. The measurement module is further configured to calculate a second unidirectional latency, where the second unidirectional latency is used to indicate a sum of a sending latency of the second optical module and a receiving latency of the first optical module. The measurement module is further configured to calculate a difference between the first unidirectional latency and the second unidirectional latency to obtain a bidirectional latency difference. The measurement module is further configured to calculate a time offset between the slave device and the master device based on the bidirectional latency difference, a first sending timestamp, a first receiving timestamp, a second sending timestamp, and a second receiving timestamp. The first sending timestamp is a timestamp that is recorded by the master device and at which the first network processor sends a synchronization packet. The first receiving timestamp is a timestamp that is recorded by the slave device and at which the second network processor receives the synchronization packet. The second sending timestamp is a timestamp that is recorded by the slave device and at which the second network processor sends a latency request packet. The second receiving timestamp is a timestamp that is recorded by the master device and at which the first network processor receives the latency request packet. The second network processor is configured to adjust local time of the slave device by using the time offset.

In a possible implementation, the measurement module is specifically configured to: receive a first difference sent by the master device, where the first difference is a difference between a first timestamp and a second timestamp, the first timestamp is a timestamp that is recorded by the master device and at which the first optical module receives first data, and the second timestamp is a timestamp that is recorded by the master device and at which the first optical module outputs second data; record a third timestamp at which the second optical module receives the second data; record a fourth timestamp at which the second optical module outputs the first data; calculate a difference between the fourth timestamp and the third timestamp to obtain a second difference; and calculate a difference between the second difference and the first difference to obtain the first unidirectional latency.

In a possible implementation, the measurement module is specifically configured to: record a fifth timestamp at which the second optical module receives third data; record a sixth timestamp at which the second optical module outputs fourth data; calculate a difference between the fifth timestamp and the sixth timestamp to obtain a third difference; receive a fourth difference sent by the master device, where the fourth difference is a difference between an eighth timestamp and a seventh timestamp, the seventh timestamp is a timestamp that is recorded by the master device and at which the first optical module receives the fourth data, and the eighth timestamp is a timestamp that is recorded by the master device and at which the first optical module outputs the third data; and calculate a difference between the fourth difference and the third difference to obtain the second unidirectional latency.

In a possible implementation, the measurement module is specifically configured to: receive a first difference sent by the master device, where the first difference is a difference between a first timestamp and a second timestamp, the first timestamp is a timestamp that is recorded by the master device and at which the first optical module receives first data, and the second timestamp is a timestamp that is recorded by the master device and at which the first optical module outputs the first data; record a third timestamp at which the second optical module receives the first data; record a fourth timestamp at which the second optical module outputs the first data; calculate a difference between the fourth timestamp and the third timestamp to obtain a second difference; and calculate a difference between the second difference and the first difference to obtain the first unidirectional latency.

In a possible implementation, the measurement module is specifically configured to: record a fifth timestamp at which the second optical module receives second data; record a sixth timestamp at which the second optical module outputs the second data; calculate a difference between the fifth timestamp and the sixth timestamp to obtain a third difference; receive a fourth difference sent by the master device, where the fourth difference is a difference between an eighth timestamp and a seventh timestamp, the seventh timestamp is a timestamp that is recorded by the master device and at which the first optical module receives the second data, and the eighth timestamp is a timestamp that is recorded by the master device and at which the first optical module outputs the second data; and calculate a difference between the fourth difference and the third difference to obtain the second unidirectional latency.

In a possible implementation, the second network processor is connected to the second optical module, and the second optical module includes the measurement module. Alternatively, the second network processor, the second optical module, and the measurement module are sequentially connected.

In a possible implementation, the measurement module is specifically configured to: calculate the time offset between the slave device and the master device according to [(t2 - 11) - (t4 - t3) - Δlatency] ÷ 2, where t1 is the first sending timestamp, t2 is the first receiving timestamp, t3 is the second sending timestamp, t4 is the second receiving timestamp, and Δlatency is the bidirectional latency difference.

According to a third aspect, a system is provided. The system includes a master device and a slave device, and the slave device is synchronized with the master device. The master device includes a first optical module and a first network processor, and the slave device includes a second optical module, a second network processor, and a measurement module. The measurement module is configured to calculate a first unidirectional latency, where the first unidirectional latency is used to indicate a sum of a sending latency of the first optical module and a receiving latency of the second optical module. The measurement module is further configured to calculate a second unidirectional latency, where the second unidirectional latency is used to indicate a sum of a sending latency of the second optical module and a receiving latency of the first optical module. The measurement module is further configured to calculate a difference between the first unidirectional latency and the second unidirectional latency to obtain a bidirectional latency difference. The measurement module is further configured to calculate a time offset between the slave device and the master device based on the bidirectional latency difference, a first sending timestamp, a first receiving timestamp, a second sending timestamp, and a second receiving timestamp. The first sending timestamp is a timestamp that is recorded by the master device and at which the first network processor sends a synchronization packet. The first receiving timestamp is a timestamp that is recorded by the slave device and at which the second network processor receives the synchronization packet. The second sending timestamp is a timestamp that is recorded by the slave device and at which the second network processor sends a latency request packet. The second receiving timestamp is a timestamp that is recorded by the master device and at which the first network processor receives the latency request packet. The second network processor is configured to adjust local time of the slave device by using the time offset.

In a possible implementation, the measurement module is specifically configured to: receive a first difference sent by the master device, where the first difference is a difference between a first timestamp and a second timestamp, the first timestamp is a timestamp that is recorded by the master device and at which the first optical module receives first data, and the second timestamp is a timestamp that is recorded by the master device and at which the first optical module outputs second data; record a third timestamp at which the second optical module receives the second data; record a fourth timestamp at which the second optical module outputs the first data; calculate a difference between the fourth timestamp and the third timestamp to obtain a second difference; and calculate a difference between the second difference and the first difference to obtain the first unidirectional latency.

In a possible implementation, the measurement module is specifically configured to: record a fifth timestamp at which the second optical module receives third data; record a sixth timestamp at which the second optical module outputs fourth data; calculate a difference between the fifth timestamp and the sixth timestamp to obtain a third difference; receive a fourth difference sent by the master device, where the fourth difference is a difference between an eighth timestamp and a seventh timestamp, the seventh timestamp is a timestamp that is recorded by the master device and at which the first optical module receives the fourth data, and the eighth timestamp is a timestamp that is recorded by the master device and at which the first optical module outputs the third data; and calculate a difference between the fourth difference and the third difference to obtain the second unidirectional latency.

In a possible implementation, the measurement module is specifically configured to: receive a first difference sent by the master device, where the first difference is a difference between a first timestamp and a second timestamp, the first timestamp is a timestamp that is recorded by the master device and at which the first optical module receives first data, and the second timestamp is a timestamp that is recorded by the master device and at which the first optical module outputs the first data; record a third timestamp at which the second optical module receives the first data; record a fourth timestamp at which the second optical module outputs the first data; calculate a difference between the fourth timestamp and the third timestamp to obtain a second difference; and calculate a difference between the second difference and the first difference to obtain the first unidirectional latency.

In a possible implementation, the measurement module is specifically configured to: record a fifth timestamp at which the second optical module receives second data; record a sixth timestamp at which the second optical module outputs the second data; calculate a difference between the fifth timestamp and the sixth timestamp to obtain a third difference; receive a fourth difference sent by the master device, where the fourth difference is a difference between an eighth timestamp and a seventh timestamp, the seventh timestamp is a timestamp that is recorded by the master device and at which the first optical module receives the second data, and the eighth timestamp is a timestamp that is recorded by the master device and at which the first optical module outputs the second data; and calculate a difference between the fourth difference and the third difference to obtain the second unidirectional latency.

In a possible implementation, the second network processor is connected to the second optical module, and the second optical module includes the measurement module. Alternatively, the second network processor, the second optical module, and the measurement module are sequentially connected.

In a possible implementation, the measurement module is specifically configured to: calculate the time offset between the slave device and the master device according to [(t2 - 11) - (t4 - t3) - Δlatency] ÷ 2, where t1 is the first sending timestamp, t2 is the first receiving timestamp, t3 is the second sending timestamp, t4 is the second receiving timestamp, and Δlatency is the bidirectional latency difference.

According to a fourth aspect, a slave device is provided, and the slave device needs to be synchronized with a master device. The master device includes a first optical module and a first network processor, and the slave device includes a second optical module and a second network processor. The slave device further includes the following modules: a calculation module, configured to calculate a first unidirectional latency, where the first unidirectional latency is used to indicate a sum of a sending latency of the first optical module and a receiving latency of the second optical module; calculate a second unidirectional latency, where the second unidirectional latency is used to indicate a sum of a sending latency of the second optical module and a receiving latency of the first optical module; calculate a difference between the first unidirectional latency and the second unidirectional latency to obtain a bidirectional latency difference; and calculate a time offset between the slave device and the master device based on the bidirectional latency difference, a first sending timestamp, a first receiving timestamp, a second sending timestamp, and a second receiving timestamp, where the first sending timestamp is a timestamp that is recorded by the master device and at which the first network processor sends a synchronization packet, the first receiving timestamp is a timestamp that is recorded by the slave device and at which the second network processor receives the synchronization packet, the second sending timestamp is a timestamp that is recorded by the slave device and at which the second network processor sends a latency request packet, and the second receiving timestamp is a timestamp that is recorded by the master device and at which the first network processor receives the latency request packet; and an adjustment module, configured to adjust local time of the slave device by using the time offset.

In a possible implementation, the calculation module is specifically configured to: receive a first difference sent by the master device, where the first difference is a difference between a first timestamp and a second timestamp, the first timestamp is a timestamp that is recorded by the master device and at which the first optical module receives first data, and the second timestamp is a timestamp that is recorded by the master device and at which the first optical module outputs second data; record a third timestamp at which the second optical module receives the second data; record a fourth timestamp at which the second optical module outputs the first data; calculate a difference between the fourth timestamp and the third timestamp to obtain a second difference; and calculate a difference between the second difference and the first difference to obtain the first unidirectional latency.

In a possible implementation, the calculation module is specifically configured to: record a fifth timestamp at which the second optical module receives third data; record a sixth timestamp at which the second optical module outputs fourth data; calculate a difference between the fifth timestamp and the sixth timestamp to obtain a third difference; receive a fourth difference sent by the master device, where the fourth difference is a difference between an eighth timestamp and a seventh timestamp, the seventh timestamp is a timestamp that is recorded by the master device and at which the first optical module receives the fourth data, and the eighth timestamp is a timestamp that is recorded by the master device and at which the first optical module outputs the third data; and calculate a difference between the fourth difference and the third difference to obtain the second unidirectional latency.

In a possible implementation, the calculation module is specifically configured to: receive a first difference sent by the master device, where the first difference is a difference between a first timestamp and a second timestamp, the first timestamp is a timestamp that is recorded by the master device and at which the first optical module receives first data, and the second timestamp is a timestamp that is recorded by the master device and at which the first optical module outputs the first data; record a third timestamp at which the second optical module receives the first data; record a fourth timestamp at which the second optical module outputs the first data; calculate a difference between the fourth timestamp and the third timestamp to obtain a second difference; and calculate a difference between the second difference and the first difference to obtain the first unidirectional latency.

In a possible implementation, the calculation module is specifically configured to: record a fifth timestamp at which the second optical module receives second data; record a sixth timestamp at which the second optical module outputs the second data; calculate a difference between the fifth timestamp and the sixth timestamp to obtain a third difference; receive a fourth difference sent by the master device, where the fourth difference is a difference between an eighth timestamp and a seventh timestamp, the seventh timestamp is a timestamp that is recorded by the master device and at which the first optical module receives the second data, and the eighth timestamp is a timestamp that is recorded by the master device and at which the first optical module outputs the second data; and calculate a difference between the fourth difference and the third difference to obtain the second unidirectional latency.

In a possible implementation, the calculation module is specifically configured to: calculate the time offset between the slave device and the master device according to [(t2 - 11) - (t4 - t3) - Δlatency] ÷ 2, where t1 is the first sending timestamp, t2 is the first receiving timestamp, t3 is the second sending timestamp, t4 is the second receiving timestamp, and Δlatency is the bidirectional latency difference.

According to a fifth aspect, a slave device is provided. The slave device includes one or more processors and a memory, and the one or more processors are configured to read software code stored in the memory, and perform the method according to any one of the first aspect or the possible implementations of the first aspect.

According to a sixth aspect, a computer-readable storage medium is provided. The computer-readable storage medium stores instructions, and when the instructions are run on a computer or a processor, the computer or the processor is enabled to perform the method according to any one of the first aspect or the possible implementations of the first aspect.

According to a seventh aspect, a computer program product including instructions is provided. When the instructions are run on a computer or a processor, the computer or the processor is enabled to perform the method according to any one of the first aspect or the possible implementations of the first aspect.

### BRIEF DESCRIPTION OF DRAWINGS

FIG. 1 is a flowchart of a processing process of implementing time synchronization in the 1588 protocol;
FIG. 2 is a schematic diagram of sending data to a slave device by a master device according to an embodiment of this application;
FIG. 3 is a schematic diagram of sending data to a master device by a slave device according to an embodiment of this application;
FIG. 4 is a schematic diagram of sending a synchronization packet to a slave device by a master device according to an embodiment of this application;
FIG. 5 is a schematic diagram of sending a follow-up packet to a slave device by a master device according to an embodiment of this application;
FIG. 6 is a schematic diagram of sending a latency request packet to a master device by a slave device according to an embodiment of this application;
FIG. 7 is a schematic diagram of sending a latency request response packet to a slave device by a master device according to an embodiment of this application;
FIG. 8 is a flowchart of a time synchronization method according to an embodiment of this application;
FIG. 9 is a detailed flowchart of step S11 in FIG. 8;
FIG. 10 is a detailed flowchart of step S12 in FIG. 8;
FIG. 11 is a detailed flowchart of step S 11 in FIG. 8;
FIG. 12 is another schematic diagram of sending data to a slave device by a master device according to an embodiment of this application;
FIG. 13 is a detailed flowchart of step S12 in FIG. 8;
FIG. 14 is another schematic diagram of sending data to a master device by a slave device according to an embodiment of this application;
FIG. 15 is a schematic diagram of a slave device according to an embodiment of this application;
FIG. 16 is a schematic diagram of another slave device according to an embodiment of this application;
FIG. 17 is a schematic diagram of still another slave device according to an embodiment of this application;
FIG. 18 is a schematic diagram of yet another slave device according to an embodiment of this application; and
FIG. 19 is a schematic diagram of a system according to an embodiment of this application.

### DESCRIPTION OF EMBODIMENTS

It can be learned from the background and FIG. 1 that a downlink transmission latency and an uplink transmission latency are considered to be the same in the conventional 1588 protocol, there is no need to measure the downlink transmission latency and the uplink transmission latency, and there is no need to calculate a difference between the downlink transmission latency and the uplink transmission latency. Therefore, a time offset is [(t2 - 11) - (t4 - t3)] ÷ 2. However, in some cases, the downlink transmission latency may be different from the uplink transmission latency. Therefore, an error may occur in the time offset measured by using the conventional 1588 protocol, and it cannot be ensured that local time of a slave device is synchronized with local time of a master device.

Embodiments of this application provide a time synchronization method. The method can resolve a problem in the background, and measure a time offset between a slave device and a master device in a more precise manner, to ensure that local time of the slave device is synchronized with local time of the master device. The time synchronization method provided in the embodiments of this application may be applied to a device having a network processor and an optical module. For example, the device having the network processor and the optical module may be a switch, a router, a base station, or the like.

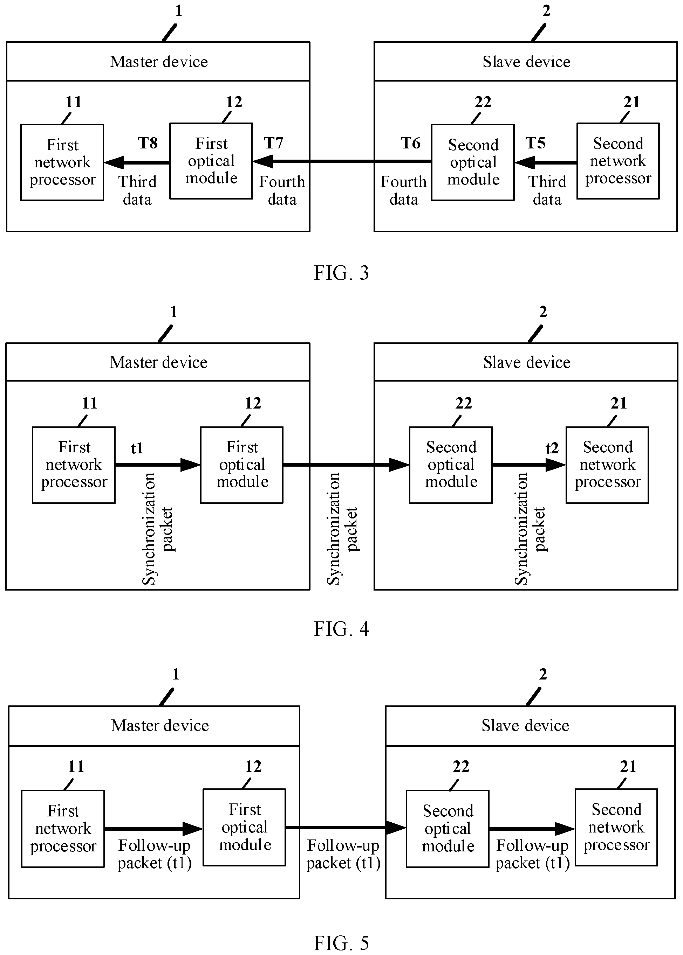

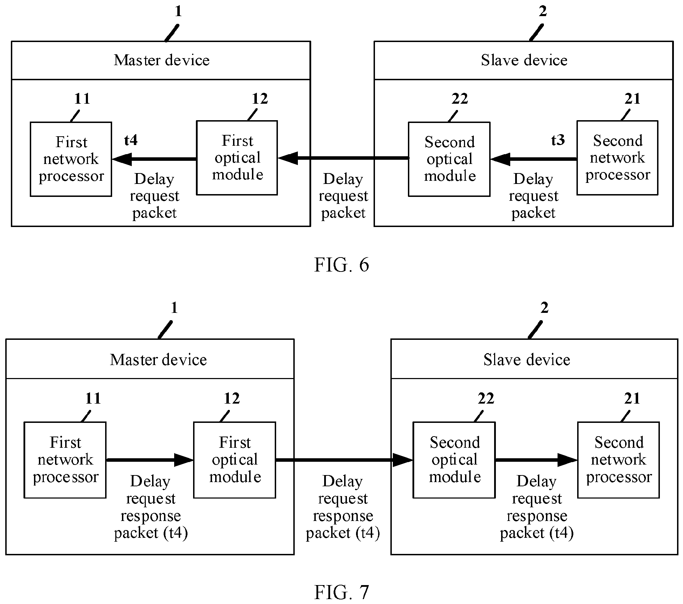

The following describes the time synchronization method provided in the embodiments of this application with reference to a specific application scenario. With reference to FIG. 2 to FIG. 7, FIG. 2 is a schematic diagram of sending data to a slave device by a master device according to an embodiment of this application. FIG. 3 is a schematic diagram of sending data to a master device by a slave device according to an embodiment of this application. FIG. 4 is a schematic diagram of sending a synchronization packet to a slave device by a master device according to an embodiment of this application. FIG. 5 is a schematic diagram of sending a follow-up packet to a slave device by a master device according to an embodiment of this application. FIG. 6 is a schematic diagram of sending a latency request packet to a master device by a slave device according to an embodiment of this application. FIG. 7 is a schematic diagram of sending a latency request response packet to a slave device by a master device according to an embodiment of this application.

In the embodiments shown in FIG. 2 to FIG. 7, the embodiments shown in FIG. 2 and FIG. 3 describe how a slave device 2 obtains a bidirectional latency difference Δlatency, and the embodiments shown in FIG. 4 to FIG. 7 describe how the slave device 2 obtains (t2 - 11) - (t4 - t3). After the slave device 2 obtains the bidirectional latency difference Δlatency and (t2 - 11) - (t4 - t3), the slave device 2 may calculate a time offset according to the formula [(t2 - 11) - (t4 - t3) - Δlatency] ÷ 2, and the slave device 2 may adjust local time of a second network processor 21 of the slave device 2 by using the time offset, to ensure that the second network processor 21 of the slave device 2 is synchronized with a first network processor 11 of a master device 1.

In the embodiments shown in FIG. 2 and FIG. 3, a downlink transmission latency includes five parts. A first part is an optical fiber transmission latency between the first network processor 11 and a first optical module 12, a second part is a sending latency of the first optical module 12, a third part is an optical fiber transmission latency between the first optical module 12 and a second optical module 22, a fourth part is a receiving latency of the second optical module 22, and a fifth part is an optical fiber transmission latency between the second optical module 22 and the second network processor 21. An uplink transmission latency includes five parts. A first part is an optical fiber transmission latency between the second network processor 21 and the second optical module 22. A second part is a sending latency of the second optical module 22. A third part is an optical fiber transmission latency between the second optical module 22 and the first optical module 12. A fourth part is a receiving latency of the first optical module 12. A fifth part is an optical fiber transmission latency between the first optical module 12 and the first network processor 11.

In the embodiments shown in FIG. 2 and FIG. 3, an optical fiber transmission latency in the downlink transmission latency is the same as an optical fiber transmission latency in the uplink transmission latency. Therefore, downlink transmission latency - uplink transmission latency = (sending latency of the first optical module 12 + receiving latency of the second optical module 22) - (sending latency of the second optical module 22 + receiving latency of the first optical module 12). In addition, first unidirectional latency = sending latency of the first optical module 12 + receiving latency of the second optical module 22, and second unidirectional latency = sending latency of the second optical module 22 + receiving latency of the first optical module 12. Therefore, downlink transmission latency - uplink transmission latency = first unidirectional latency - second unidirectional latency = bidirectional latency difference Δlatency. In conclusion, the embodiments shown in FIG. 2 and FIG. 3 describe how the slave device 2 obtains the bidirectional latency difference Δlatency.

In the embodiments shown in FIG. 2 to FIG. 7, the master device 1 includes the first network processor 11 and the first optical module 12, and the slave device 2 includes the second network processor 21 and the second optical module 22.

With reference to the embodiment shown in FIG. 2, the following describes an execution process of obtaining the first unidirectional latency by the slave device 2.

In the embodiment shown in FIG. 2, the first network processor 11 of the master device 1 sends first data to the first optical module 12, and the master device 1 records, by using a timer, a first timestamp T1 at which the first optical module 12 receives the first data. The first optical module 12 of the master device 1 converts the first data into second data, and the first optical module 12 of the master device 1 sends the second data to the second optical module 22 of the slave device 2. The master device 1 records, by using the timer, a second timestamp T2 at which the first optical module 12 outputs the second data. The master device 1 calculates a difference between the first timestamp T1 and the second timestamp T2, to obtain a first difference (T1 - T2), and the master device 1 sends the first difference (T1 - T2) to the slave device 2.

In the embodiment shown in FIG. 2, the slave device 2 receives the first difference (T1 - T2) sent by the master device 1. The slave device 2 records, by using a timer, a third timestamp T3 at which the second optical module 22 receives the second data. The second optical module 22 of the slave device 2 converts the second data into the first data, and the second optical module 22 of the slave device 2 sends the first data to the second network processor 21. The slave device 2 records, by using the timer, a fourth timestamp T4 at which the second optical module 22 outputs the first data. The slave device 2 calculates a difference between the fourth timestamp T4 and the third timestamp T3 to obtain a second difference (T4 - T3), and the slave device 2 calculates a difference between the second difference (T4 - T3) and the first difference (T1 - T2) to obtain the first unidirectional latency Td.

In the embodiment shown in FIG. 2, the sending latency of the first optical module 12 of the master device 1 is (T2 - T1), the receiving latency of the second optical module 22 of the slave device 2 is (T4 - T3), and sending latency of the first optical module 12 + receiving latency of the second optical module 22 = (T4 - T3) + (T2 - T1) = (T4 - T3) - (T1 - T2) = first unidirectional latency Td. Therefore, the first unidirectional latency Td can indicate a sum of the sending latency of the first optical module 12 of the master device 1 and the receiving latency of the second optical module 22 of the slave device 2.

With reference to the embodiment shown in FIG. 3, the following describes an execution process of obtaining the second unidirectional latency by the slave device 2.

In the embodiment shown in FIG. 3, the second network processor 21 of the slave device 2 sends third data to the second optical module 22, and the slave device 2 records, by using a timer, a fifth timestamp T5 at which the second optical module 22 receives the third data. The second optical module 22 of the slave device 2 converts the third data into fourth data, and the second optical module 22 of the slave device 2 sends the fourth data to the first optical module 12 of the master device 1. The slave device 2 records, by using the timer, a sixth timestamp T6 at which the second optical module 22 outputs the fourth data, and the slave device 2 calculates a difference between the fifth timestamp T5 and the sixth timestamp T6 to obtain a third difference (T5 - T6).

In the embodiment shown in FIG. 3, the master device 1 records, by using a timer, a seventh timestamp T7 at which the first optical module 12 receives the fourth data. The first optical module 12 of the master device 1 converts the fourth data into the third data, and the first optical module 12 of the master device 1 sends the third data to the first network processor 11. The master device 1 records, by using the timer, an eighth timestamp T8 at which the first optical module 12 outputs the third data. The master device 1 calculates a difference between the eighth timestamp T8 and the seventh timestamp T7 to obtain a fourth difference (T8 - T7), and the master device 1 sends the fourth difference (T8 - T7) to the slave device 2. The slave device 2 calculates a difference between the fourth difference (T8 - T7) and the third difference (T5 - T6) to obtain the second unidirectional latency Tu.

In the embodiment shown in FIG. 3, the sending latency of the second optical module 22 of the slave device 2 is (T6 - T5), the receiving latency of the first optical module 12 of the master device 1 is (T8 - T7), and sending latency of the second optical module 22 + receiving latency of the first optical module 12 = (T8 - T7) + (T6 - T5) = (T8 - T7) - (T5 - T6) = second unidirectional latency Tu. Therefore, the second unidirectional latency Tu may indicate a sum of the sending latency of the second optical module 22 and the receiving latency of the first optical module 12.

In the embodiments shown in FIG. 2 and FIG. 3, after the slave device 2 obtains the first unidirectional latency Td and the second unidirectional latency Tu, the slave device 2 may calculate a difference between the first unidirectional latency Td and the second unidirectional latency Tu to obtain the bidirectional latency difference Δlatency.

In the embodiments shown in FIG. 2 and FIG. 3, the first data, the second data, the third data, and the fourth data may be frame headers of data frames, or the first data, the second data, the third data, and the fourth data may be packet headers of data packets.

With reference to the embodiments shown in FIG. 4 to FIG. 7, the following describes an execution process of obtaining a first sending timestamp t1, a first receiving timestamp t2, a second sending timestamp t3, and a second receiving timestamp t4 by the slave device 2.

Referring to FIG. 4, the first network processor 11 of the master device 1 sends a synchronization packet to the first optical module 12, and the master device 1 records the first sending timestamp t1 at which the first network processor 11 sends the synchronization packet. The first optical module 12 of the master device 1 sends the synchronization packet to the second optical module 22 of the slave device 2. The second optical module 22 of the slave device 2 sends the synchronization packet to the second network processor 21 of the slave device 2, and the slave device 2 records the first receiving timestamp t2 at which the second network processor 21 receives the synchronization packet.

Referring to FIG. 5, the first network processor 11 of the master device 1 encapsulates the first sending timestamp t1 into a follow-up packet, and the first network processor 11 of the master device 1 sends, by using the first optical module 12 and the second optical module 22, the follow-up packet that carries t1 to the second network processor 21 of the slave device 2.

Referring to FIG. 6, the second network processor 21 of the slave device 2 sends a latency request packet to the second optical module 22, and the slave device 2 records the second sending timestamp t3 at which the second network processor 21 sends the latency request packet. The second optical module 22 of the slave device 2 sends the latency request packet to the first optical module 12 of the master device 1. The first optical module 12 of the master device 1 sends the latency request packet to the first network processor 11 of the master device 1, and the master device 1 records the second receiving timestamp t4 at which the first network processor 11 receives the latency request packet.

Referring to FIG. 7, the first network processor 11 of the master device 1 encapsulates the second receiving timestamp t4 into a latency request response packet, and the first network processor 11 of the master device 1 sends, by using the first optical module 12 and the second optical module 22, the latency request response packet that carries t4 to the second network processor 21 of the slave device 2.

In the embodiments shown in FIG. 2 to FIG. 7, the slave device 2 calculates the bidirectional latency difference Δlatency, and the slave device 2 further obtains the first sending timestamp t1, the first receiving timestamp t2, the second sending timestamp t3, and the second receiving timestamp t4. In this case, the slave device 2 can calculate the time offset between the slave device and the master device according to the formula [(t2 - 11) - (t4 - t3) - Δlatency] ÷ 2, and the slave device 2 can adjust the local time of the second network processor 21 of the slave device 2 by using the time offset, to ensure that the second network processor 21 of the slave device 2 is synchronized with the first network processor 11 of the master device 1. Because the time offset calculated by the slave device 2 is more precise, the second network processor 21 of the slave device 2 can be synchronized with the first network processor 11 of the master device 1 with higher precision.

It should be noted that the embodiments shown in FIG. 2 to FIG. 7 are used to enable a reader to quickly understand technical principles of the embodiments of this application, but are not intended to limit a protection scope of the embodiments of this application. Specific parameter values in the embodiments shown in FIG. 2 to FIG. 7 may be changed according to principles of the embodiments of this application. The protection scope of the embodiments of this application is not limited to the described specific parameter values.

Application scenarios provided in the embodiments of this application are briefly described above by using the embodiments shown in FIG. 2 to FIG. 7. The following describes execution processes, technical principles, and embodiments of the time synchronization method provided in the embodiments of this application.

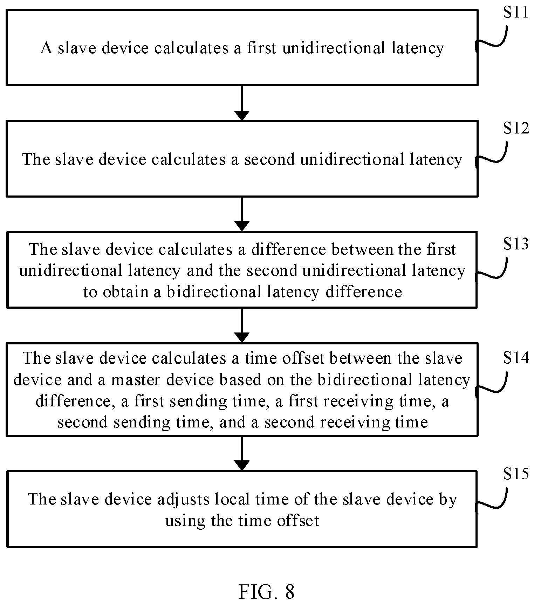

FIG. 8 is a flowchart of a time synchronization method according to an embodiment of this application. The method shown in FIG. 8 may be applied to a slave device, and the method can ensure that the slave device needs to be synchronized with a master device. The master device includes a first optical module and a first network processor, and the slave device includes a second optical module and a second network processor. The method shown in FIG. 8 includes the following steps.

Step S 11: The slave device calculates a first unidirectional latency.

The first unidirectional latency is used to indicate a sum of a sending latency of the first optical module and a receiving latency of the second optical module.

To better understand a specific execution process of step S11, refer to the embodiment shown in FIG. 2. The embodiment shown in FIG. 2 describes the execution process of calculating the first unidirectional latency by the slave device 2.

Step S12: The slave device calculates a second unidirectional latency.

The second unidirectional latency is used to indicate a sum of a sending latency of the second optical module and a receiving latency of the first optical module.

To better understand a specific execution process of step S12, refer to the embodiment shown in FIG. 3. The embodiment shown in FIG. 3 describes the execution process of calculating the second unidirectional latency by the slave device.

Step S13: The slave device calculates a difference between the first unidirectional latency and the second unidirectional latency to obtain a bidirectional latency difference.

Step S14: The slave device calculates a time offset between the slave device and the master device based on the bidirectional latency difference, a first sending timestamp, a first receiving timestamp, a second sending timestamp, and a second receiving timestamp.

The first sending timestamp is a timestamp that is recorded by the master device and at which the first network processor sends a synchronization packet. The first receiving timestamp is a timestamp that is recorded by the slave device and at which the second network processor receives the synchronization packet. The second sending timestamp is a timestamp that is recorded by the slave device and at which the second network processor sends a latency request packet. The second receiving timestamp is a timestamp that is recorded by the master device and at which the first network processor receives the latency request packet.

To better understand a specific execution process of step S14, refer to the embodiments shown in FIG. 4 to FIG. 7. The embodiments shown in FIG. 4 to FIG. 7 describe the execution processes of obtaining the first sending timestamp t1, the first receiving timestamp t2, the second sending timestamp t3, and the second receiving timestamp t4 by the slave device 2.

After the slave device obtains the bidirectional latency difference, the first sending timestamp, the first receiving timestamp, the second sending timestamp, and the second receiving timestamp, the slave device may calculate the time offset between the slave device and the master device according to a formula [(t2 - 11) - (t4 - t3) - Δlatency] ÷ 2, where t1 is the first sending timestamp, t2 is the first receiving timestamp, t3 is the second sending timestamp, t4 is the second receiving timestamp, and Δlatency is the bidirectional latency difference.

In step S14, when the time offset between the slave device and the master device is calculated, the bidirectional latency difference is used to indicate a difference between the first unidirectional latency and the second unidirectional latency, to ensure that the final time offset obtained by calculation is more precise.

Step S15: The slave device adjusts local time of the slave device by using the time offset.

In the embodiment shown in FIG. 8, in a process of calculating the time offset in this embodiment of this application, considering that the first unidirectional latency is different from the second unidirectional latency, the slave device needs to measure the bidirectional latency difference, and calculates the time offset between the slave device and the master device based on the bidirectional latency difference, the first sending timestamp, the first receiving timestamp, the second sending timestamp, and the second receiving timestamp, and the slave device adjusts the local time of the slave device by using the time offset. In this embodiment of this application, the time offset between the slave device and the master device is measured in a more precise manner, to ensure that the local time of the slave device is synchronized with the local time of the master device.

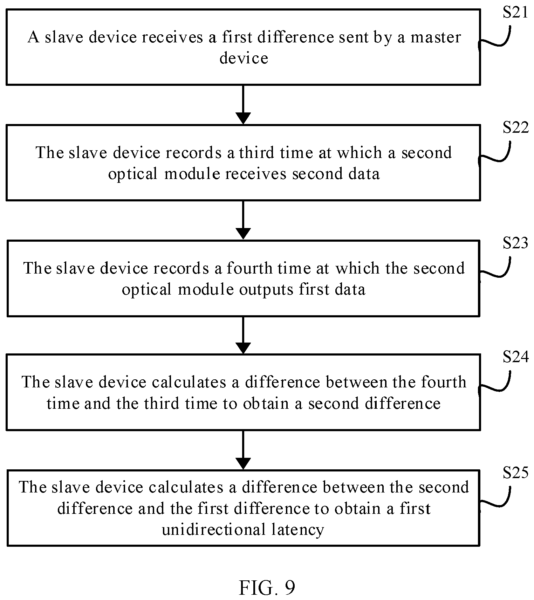

FIG. 9 is a detailed flowchart of step S11 in FIG. 8. The method shown in FIG. 9 includes the following steps.

Step S21: The slave device receives a first difference sent by the master device.

The first difference is a difference between a first timestamp and a second timestamp, the first timestamp is a timestamp that is recorded by the master device and at which the first optical module receives first data, and the second timestamp is a timestamp that is recorded by the master device and at which the first optical module outputs second data.

Step S22: The slave device records a third timestamp at which the second optical module receives the second data.

Step S23: The slave device records a fourth timestamp at which the second optical module outputs the first data.

Step S24: The slave device calculates a difference between the fourth timestamp and the third timestamp to obtain a second difference.

Step S25: The slave device calculates a difference between the second difference and the first difference to obtain the first unidirectional latency.

To better understand a specific execution process of step S21 to step S25, refer to the embodiment shown in FIG. 2. The embodiment shown in FIG. 2 describes the execution process of calculating the first unidirectional latency by the slave device 2.

In the embodiment shown in FIG. 9, the master device sends the first difference to the slave device, so that after the slave device calculates the second difference, the slave device can calculate the difference between the second difference and the first difference to obtain the first unidirectional latency.

Certainly, the first unidirectional latency may be calculated by the master device. In this case, the slave device needs to send the second difference to the master device, so that after the master device calculates the first difference, the master device can calculate the difference between the second difference and the first difference to obtain the first unidirectional latency, and the master device then sends the first unidirectional latency to the slave device.

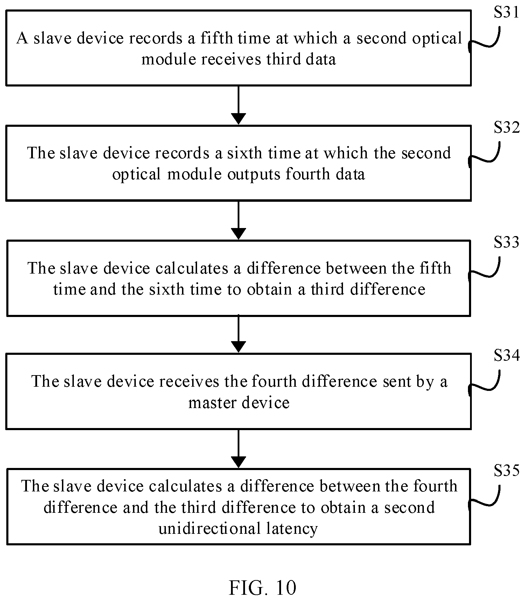

FIG. 10 is a detailed flowchart of step S12 in FIG. 8. The method shown in FIG. 10 includes the following steps:
Step S31: The slave device records a fifth timestamp at which the second optical module receives third data.
Step S32: The slave device records a sixth timestamp at which the second optical module outputs fourth data.
Step S33: The slave device calculates a difference between the fifth timestamp and the sixth timestamp to obtain a third difference.
Step S34: The slave device receives a fourth difference sent by the master device.

The fourth difference is a difference between an eighth timestamp and a seventh timestamp, the seventh timestamp is a timestamp that is recorded by the master device and at which the first optical module receives the fourth data, and the eighth timestamp is a timestamp that is recorded by the master device and at which the first optical module outputs the third data.

Step S3 5: The slave device calculates a difference between the fourth difference and the third difference to obtain the second unidirectional latency.

To better understand a specific execution process of step S31 to step S35, refer to the embodiment shown in FIG. 3. The embodiment shown in FIG. 3 describes the execution process of calculating the second unidirectional latency by the slave device 2.

In the embodiment shown in FIG. 10, the master device sends the fourth difference to the slave device, so that after the slave device calculates the third difference, the slave device can calculate the difference between the fourth difference and the third difference to obtain the second unidirectional latency.

Certainly, the second unidirectional latency may be calculated by the master device. In this case, the slave device needs to send the third difference to the master device, so that after the master device calculates the fourth difference, the master device can calculate the difference between the fourth difference and the third difference to obtain the second unidirectional latency, and the master device then sends the second unidirectional latency to the slave device.

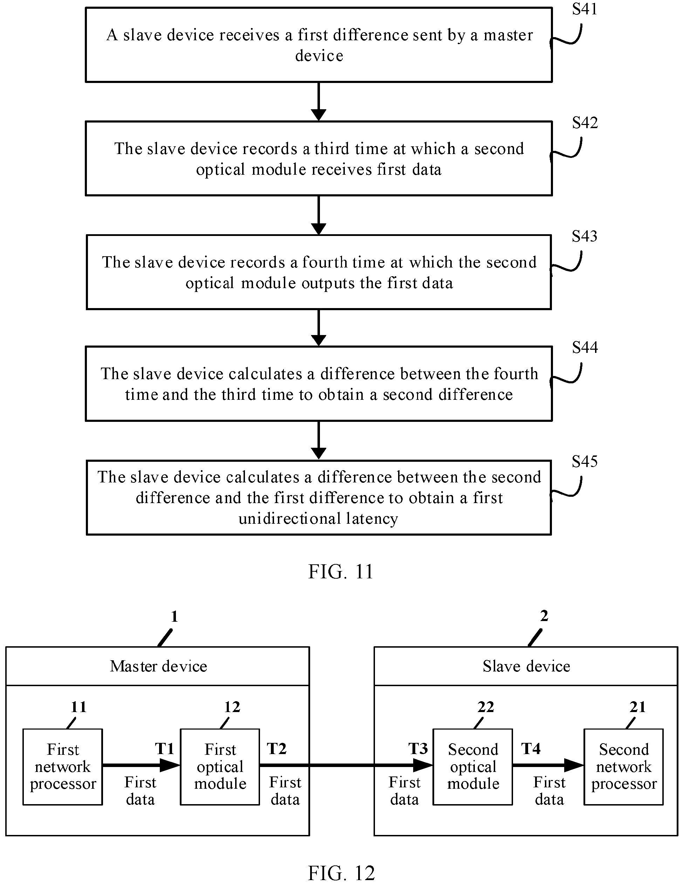

FIG. 11 is a detailed flowchart of step S11 in FIG. 8. The method shown in FIG. 11 includes the following steps:
Step S41: The slave device receives a first difference sent by the master device.

The first difference is a difference between a first timestamp and a second timestamp, the first timestamp is a timestamp that is recorded by the master device and at which the first optical module receives first data, and the second timestamp is a timestamp that is recorded by the master device and at which the first optical module outputs the first data.

Step S42: The slave device records a third timestamp at which the second optical module receives the first data.

Step S43: The slave device records a fourth timestamp at which the second optical module outputs the first data.

Step S44: The slave device calculates a difference between the fourth timestamp and the third timestamp to obtain a second difference.

Step S45: The slave device calculates a difference between the second difference and the first difference to obtain the first unidirectional latency.

In the embodiment shown in FIG. 11, the master device sends the first difference to the slave device, so that after the slave device calculates the second difference, the slave device can calculate the difference between the second difference and the first difference to obtain the first unidirectional latency.

Certainly, the first unidirectional latency may be calculated by the master device. In this case, the slave device needs to send the second difference to the master device, so that after the master device calculates the first difference, the master device can calculate the difference between the second difference and the first difference to obtain the first unidirectional latency, and the master device then sends the first unidirectional latency to the slave device.

To better understand a specific execution process of step S41 to step S45, refer to the embodiment shown in FIG. 12. The embodiment shown in FIG. 12 describes an execution process of calculating a first unidirectional latency by a slave device 2.

FIG. 12 is another schematic diagram of sending data to a slave device by a master device according to an embodiment of this application. In the embodiment shown in FIG. 12, a first network processor 11 of a master device 1 sends first data to a first optical module 12, and the master device 1 records, by using a timer, a first timestamp T1 at which the first optical module 12 receives the first data. The first optical module 12 of the master device 1 sends the first data to a second optical module 22 of a slave device 2, and the master device 1 records, by using the timer, a second timestamp T2 at which the first optical module 12 outputs the first data. The master device 1 calculates a difference between the first timestamp T1 and the second timestamp T2, to obtain a first difference (T1 - T2), and the master device 1 sends the first difference (T1 - T2) to the slave device 2.

In the embodiment shown in FIG. 12, the slave device 2 receives the first difference (T1 - T2) sent by the master device 1. The slave device 2 records, by using a timer, a third timestamp T3 at which the second optical module 22 receives the first data, the second optical module 22 of the slave device 2 sends the first data to a second network processor 21, and the slave device 2 records, by using the timer, a fourth timestamp T4 at which the second optical module 22 outputs the first data. The slave device 2 calculates a difference between the fourth timestamp T4 and the third timestamp T3 to obtain a second difference (T4 - T3), and the slave device 2 calculates a difference between the second difference (T4 - T3) and the first difference (T1 - T2) to obtain a first unidirectional latency Td.

In the embodiment shown in FIG. 12, a sending latency of the first optical module 12 of the master device 1 is (T2 - T1), a receiving latency of the second optical module 22 of the slave device 2 is (T4 - T3), and sending latency of the first optical module 12 + receiving latency of the second optical module 22 = (T4 - T3) + (T2 - T1) = (T4 - T3) - (T1 - T2) = first unidirectional latency Td. Therefore, the first unidirectional latency Td can indicate a sum of the sending latency of the first optical module 12 of the master device 1 and the receiving latency of the second optical module 22 of the slave device 2.

In the embodiment shown in FIG. 12, the first data may be a frame header of a data frame, or the first data may be a packet header of a data packet.

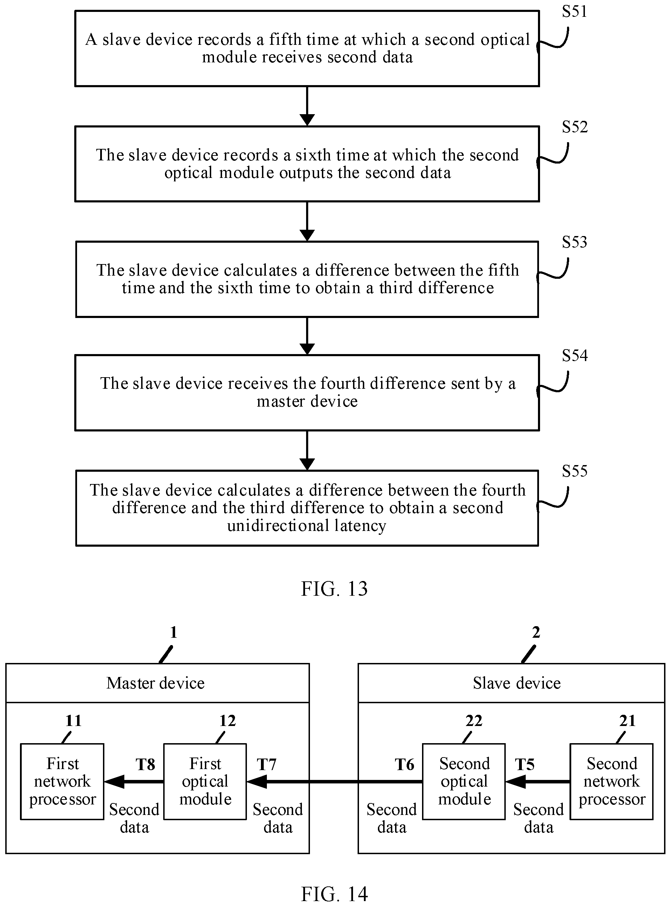

FIG. 13 is a detailed flowchart of step S12 in FIG. 8. The method shown in FIG. 13 includes the following steps:
Step S51: The slave device records a fifth timestamp at which the second optical module receives second data.
Step S52: The slave device records a sixth timestamp at which the second optical module outputs the second data.
Step S53: The slave device calculates a difference between the fifth timestamp and the sixth timestamp to obtain a third difference.
Step S54: The slave device receives the fourth difference sent by the master device.

The fourth difference is a difference between an eighth timestamp and a seventh timestamp, the seventh timestamp is a timestamp that is recorded by the master device and at which the first optical module receives the second data, and the eighth timestamp is a timestamp that is recorded by the master device and at which the first optical module outputs the second data.

Step S55: The slave device calculates a difference between the fourth difference and the third difference to obtain the second unidirectional latency.

In the embodiment shown in FIG. 13, the master device sends the fourth difference to the slave device, so that after the slave device calculates the third difference, the slave device can calculate the difference between the fourth difference and the third difference to obtain the second unidirectional latency.

Certainly, the second unidirectional latency may be calculated by the master device. In this case, the slave device needs to send the third difference to the master device, so that after the master device calculates the fourth difference, the master device can calculate the difference between the fourth difference and the third difference to obtain the second unidirectional latency, and the master device then sends the second unidirectional latency to the slave device.

To better understand a specific execution process of step S51 to step S55, refer to the embodiment shown in FIG. 14. The embodiment shown in FIG. 14 describes an execution process of calculating a second unidirectional latency by a slave device 2.

FIG. 14 is another schematic diagram of sending data to a master device by a slave device according to an embodiment of this application. In the embodiment shown in FIG. 14, a second network processor 21 of the slave device 2 sends second data to a second optical module 22, and the slave device 2 records, by using a timer, a fifth timestamp T5 at which the second optical module 22 receives the second data. The second optical module 22 of the slave device 2 sends the second data to a first optical module 12 of a master device 1, and the slave device 2 records, by using the timer, a sixth timestamp T6 at which the second optical module 22 outputs the second data. The slave device 2 calculates a difference between the fifth timestamp T5 and the sixth timestamp T6 to obtain a third difference (T5 - T6).

In the embodiment shown in FIG. 14, the master device 1 records, by using a timer, a seventh timestamp T7 at which a first optical module 12 receives the second data, and the first optical module 12 of the master device 1 sends the second data to a first network processor 11. The master device 1 records, by using the timer, an eighth timestamp T8 at which the first optical module 12 outputs the second data. The master device 1 calculates a difference between the eighth timestamp T8 and the seventh timestamp T7 to obtain a fourth difference (T8 - T7), and the master device 1 sends the fourth difference (T8 - T7) to the slave device 2. The slave device 2 calculates a difference between the fourth difference (T8 - T7) and the third difference (T5 - T6) to obtain a second unidirectional latency Tu.

In the embodiment shown in FIG. 14, a sending latency of the second optical module 22 of the slave device 2 is (T6 - T5), a receiving latency of the first optical module 12 of the master device 1 is (T8 - T7), and sending latency of the second optical module 22 + receiving latency of the first optical module 12 = (T8 - T7) + (T6 - T5) = (T8 - T7) - (T5 - T6) = second unidirectional latency Tu. Therefore, the second unidirectional latency Tu may indicate a sum of the sending latency of the second optical module 22 and the receiving latency of the first optical module 12.

In the embodiment shown in FIG. 14, the second data may be a frame header of a data frame, or the second data may be a packet header of a data packet.

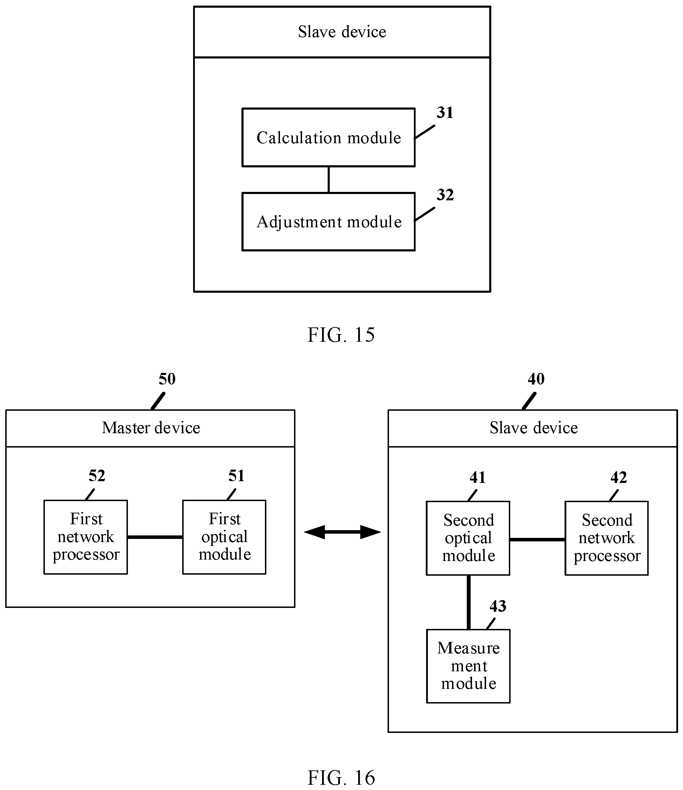

FIG. 15 is a schematic diagram of a slave device according to an embodiment of this application. The slave device shown in FIG. 15 needs to be synchronized with a master device. The master device includes a first optical module and a first network processor, and the slave device includes a second optical module and a second network processor. The slave device further includes the following modules:
a calculation module 31, configured to: calculate a first unidirectional latency by the slave device, where the first unidirectional latency is used to indicate a sum of a sending latency of the first optical module and a receiving latency of the second optical module; calculate a second unidirectional latency, where the second unidirectional latency is used to indicate a sum of a sending latency of the second optical module and a receiving latency of the first optical module; calculate a difference between the first unidirectional latency and the second unidirectional latency to obtain a bidirectional latency difference; and calculate a time offset between the slave device and the master device based on the bidirectional latency difference, a first sending timestamp, a first receiving timestamp, a second sending timestamp, and a second receiving timestamp, where the first sending timestamp is a timestamp that is recorded by the master device and at which the first network processor sends a synchronization packet, the first receiving timestamp is a timestamp that is recorded by the slave device and at which the second network processor receives the synchronization packet, the second sending timestamp is a timestamp that is recorded by the slave device and at which the second network processor sends a latency request packet, and the second receiving timestamp is a timestamp that is recorded by the master device and at which the first network processor receives the latency request packet; and for an implementation of the calculation module 31, refer to detailed descriptions of step S11 to step S14 in the method embodiment shown in FIG. 8; and an adjustment module 32, configured to adjust local time of the slave device by using the time offset. For an implementation of the adjustment module 32, refer to the detailed description of step S15 in the method embodiment shown in FIG. 8.

In an implementable embodiment, the calculation module 31 is specifically configured to: receive a first difference sent by the master device, where the first difference is a difference between a first timestamp and a second timestamp, the first timestamp is a timestamp that is recorded by the master device and at which the first optical module receives first data, and the second timestamp is a timestamp that is recorded by the master device and at which the first optical module outputs second data; record a third timestamp at which the second optical module receives the second data; record a fourth timestamp at which the second optical module outputs the first data; calculate a difference between the fourth timestamp and the third timestamp to obtain a second difference; and calculate a difference between the second difference and the first difference to obtain the first unidirectional latency. For an implementation of the calculation module 31, refer to detailed descriptions of step S21 to step S25 in the method embodiment shown in FIG. 9.

In an implementable embodiment, the calculation module 31 is specifically configured to: record a fifth timestamp at which the second optical module receives third data; record a sixth timestamp at which the second optical module outputs fourth data; calculate a difference between the fifth timestamp and the sixth timestamp to obtain a third difference; receive a fourth difference sent by the master device, where the fourth difference is a difference between an eighth timestamp and a seventh timestamp, the seventh timestamp is a timestamp that is recorded by the master device and at which the first optical module receives the fourth data, and the eighth timestamp is a timestamp that is recorded by the master device and at which the first optical module outputs the third data; and calculate a difference between the fourth difference and the third difference to obtain the second unidirectional latency. For an implementation of the calculation module 31, refer to detailed descriptions of step S31 to step S35 in the method embodiment shown in FIG. 10.

In an implementable embodiment, the calculation module 31 is specifically configured to: receive a first difference sent by the master device, where the first difference is a difference between a first timestamp and a second timestamp, the first timestamp is a timestamp that is recorded by the master device and at which the first optical module receives first data, and the second timestamp is a timestamp that is recorded by the master device and at which the first optical module outputs the first data; record a third timestamp at which the second optical module receives the first data; record a fourth timestamp at which the second optical module outputs the first data; calculate a difference between the fourth timestamp and the third timestamp to obtain a second difference; and calculate a difference between the second difference and the first difference to obtain the first unidirectional latency. For an implementation of the calculation module 31, refer to detailed descriptions of step S41 to step S45 in the method embodiment shown in FIG. 11.

In an implementable embodiment, the calculation module 31 is specifically configured to: record a fifth timestamp at which the second optical module receives second data; record a sixth timestamp at which the second optical module outputs the second data; calculate a difference between the fifth timestamp and the sixth timestamp to obtain a third difference; receive a fourth difference sent by the master device, where the fourth difference is a difference between an eighth timestamp and a seventh timestamp, the seventh timestamp is a timestamp that is recorded by the master device and at which the first optical module receives the second data, and the eighth timestamp is a timestamp that is recorded by the master device and at which the first optical module outputs the second data; and calculate a difference between the fourth difference and the third difference to obtain the second unidirectional latency. For an implementation of the calculation module 31, refer to detailed descriptions of step S51 to step S55 in the method embodiment shown in FIG. 13.

In an implementable embodiment, the calculation module 31 is specifically configured to calculate the time offset between the slave device and the master device according to [(t2 - 11) - (t4 - t3) - Δlatency] ÷ 2, where t1 is a first sending timestamp, t2 is a first receiving timestamp, t3 is a second sending timestamp, t4 is a second receiving timestamp, and Δlatency is a bidirectional latency difference. For an implementation of the calculation module 31, refer to the detailed description of step S 14 in the method embodiment shown in FIG. 8.

FIG. 16 is a schematic diagram of another slave device according to an embodiment of this application. A slave device 40 shown in FIG. 16 needs to be synchronized with a master device 50. The master device 50 includes a first optical module 51 and a first network processor 52. The slave device 40 includes a second optical module 41, a second network processor 42, and a measurement module 43. The second optical module 41 is separately connected to the second network processor 42 and the measurement module 43.

In the embodiment shown in FIG. 16, the measurement module 43 is configured to calculate a first unidirectional latency, where the first unidirectional latency is used to indicate a sum of a sending latency of the first optical module 51 and a receiving latency of the second optical module 41. The measurement module 43 is further configured to calculate a second unidirectional latency, where the second unidirectional latency is used to indicate a sum of a sending latency of the second optical module 41 and a receiving latency of the first optical module 51. The measurement module 43 is further configured to calculate a difference between the first unidirectional latency and the second unidirectional latency to obtain a bidirectional latency difference. The measurement module 43 is further configured to calculate a time offset between the slave device 40 and the master device 50 based on the bidirectional latency difference, a first sending timestamp, a first receiving timestamp, a second sending timestamp, and a second receiving timestamp. The first sending timestamp is a timestamp that is recorded by the master device 50 and at which the first network processor 52 sends a synchronization packet. The first receiving timestamp is a timestamp that is recorded by the slave device 40 and at which the second network processor 42 receives the synchronization packet. The second sending timestamp is a timestamp that is recorded by the slave device 40 and at which the second network processor 42 sends a latency request packet. The second receiving timestamp is a timestamp that is recorded by the master device 50 and at which the first network processor 52 receives the latency request packet. The second network processor 42 is configured to adjust local time of the slave device 40 by using the time offset.

In an implementable embodiment, the measurement module 43 is specifically configured to: receive a first difference sent by the master device 50, where the first difference is a difference between a first timestamp and a second timestamp, and the first timestamp is a timestamp that is recorded by the master device 50 and at which the first optical module 51 receives first data, and the second timestamp is a timestamp that is recorded by the master device 50 and at which the first optical module 51 outputs second data; record a third timestamp at which the second optical module 41 receives the second data; record a fourth timestamp at which the second optical module 41 outputs the first data; calculate a difference between the fourth timestamp and the third timestamp to obtain a second difference; and calculate a difference between the second difference and the first difference to obtain the first unidirectional latency.

In an implementable embodiment, the measurement module 43 is specifically configured to: record a fifth timestamp at which the second optical module 41 receives third data; record a sixth timestamp at which the second optical module 41 outputs fourth data; calculate a difference between the fifth timestamp and the sixth timestamp to obtain a third difference; receive a fourth difference sent by the master device 50, where the fourth difference is a difference between an eighth timestamp and a seventh timestamp, the seventh timestamp is a timestamp that is recorded by the master device 50 and at which the first optical module 51 receives the fourth data, and the eighth timestamp is a timestamp that is recorded by the master device 50 and at which the first optical module 51 outputs the third data; and calculate a difference between the fourth difference and the third difference to obtain the second unidirectional latency.

In an implementable embodiment, the measurement module 43 is specifically configured to: receive a first difference sent by the master device 50, where the first difference is a difference between a first timestamp and a second timestamp, the first timestamp is a timestamp that is recorded by the master device 50 and at which the first optical module 51 receives first data, and the second timestamp is a timestamp that is recorded by the master device 50 and at which the first optical module 51 outputs the first data; record a third timestamp at which the second optical module 41 receives the first data; record a fourth timestamp at which the second optical module 41 outputs the first data; calculate a difference between the fourth timestamp and the third timestamp to obtain a second difference; and calculate a difference between the second difference and the first difference to obtain the first unidirectional latency.

In an implementable embodiment, the measurement module 43 is specifically configured to: record a fifth timestamp at which the second optical module 41 receives second data; record a sixth timestamp at which the second optical module 41 outputs the second data; calculate a difference between the fifth timestamp and the sixth timestamp to obtain a third difference; receive a fourth difference sent by the master device 50, where the fourth difference is a difference between an eighth timestamp and a seventh timestamp, the seventh timestamp is a timestamp that is recorded by the master device 50 and at which the first optical module 51 receives the second data, and the eighth timestamp is a timestamp that is recorded by the master device 50 and at which the first optical module 51 outputs the second data; and calculate a difference between the fourth difference and the third difference to obtain the second unidirectional latency.

In an implementable embodiment, the measurement module 43 is specifically configured to calculate the time offset between the slave device 40 and the master device 50 according to [(t2 - 11) - (t4 - t3) - Δlatency] ÷ 2, where t1 is the first sending timestamp, t2 is the first receiving timestamp, t3 is the second sending timestamp, t4 is the second receiving timestamp, and Δlatency is the bidirectional latency difference.

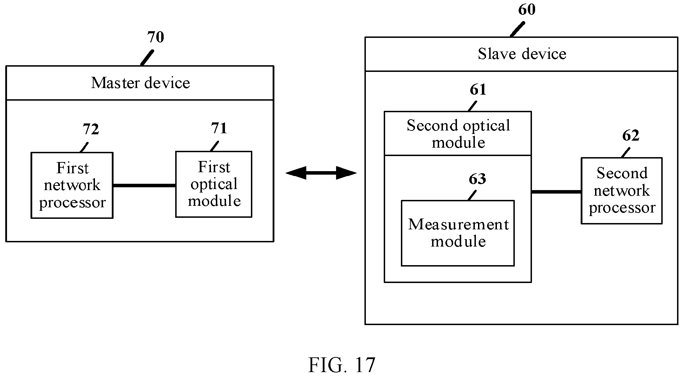

FIG. 17 is a schematic diagram of still another slave device according to an embodiment of this application. A slave device 60 shown in FIG. 17 needs to be synchronized with a master device 70. The master device 70 includes a first optical module 71 and a first network processor 72. The slave device 60 includes a second optical module 61 and a second network processor 62. The second optical module 61 includes a measurement module 63, and the second optical module 61 is connected to the second network processor 62.

In FIG. 16 and FIG. 17, the measurement module 43 shown in FIG. 16 is disposed outside the second optical module 41, and the measurement module 63 shown in FIG. 17 is disposed inside the second optical module 61. The measurement module 43 shown in FIG. 16 implements a same function as the measurement module 63 shown in FIG. 17. For specific implementation of the measurement module 63 shown in FIG. 17, refer to related descriptions of the measurement module 43 shown in FIG. 16.

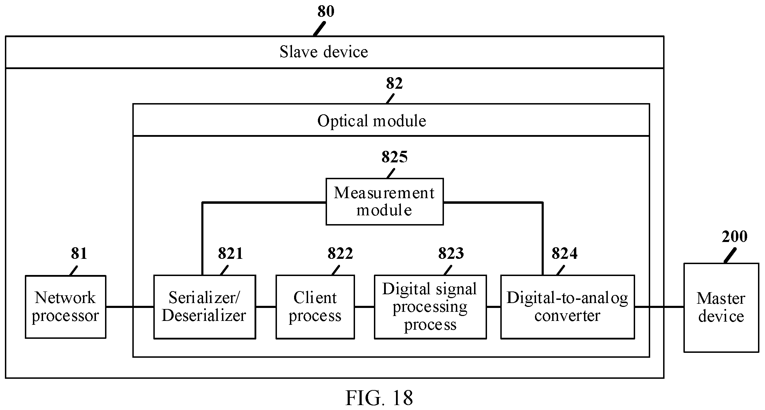

FIG. 18 is a schematic diagram of yet another slave device according to an embodiment of this application. The slave device 80 shown in FIG. 18 includes a network processor 81 and an optical module 82. The optical module 82 includes a serializer/deserializer 821, a client process 822, a digital signal processing process 823, a digital-to-analog converter 824, and a measurement module 825.

The following describes a process in which the measurement module 825 calculates a sending latency of the optical module 82.

First of all, when the serializer/deserializer 821 receives client service data sent by the network processor 81, the serializer/deserializer 821 separately sends the client service data to the client process 822 and the measurement module 825. When the measurement module 825 receives the client service data sent by the serializer/deserializer 821, the measurement module 825 records a first timestamp T1, where the first timestamp T 1 is used to indicate a timestamp at which the client service data enters the optical module 82.

Secondly, after the client process 822 receives the client service data sent by the serializer/deserializer 821, the client process 822 converts the client service data into optical transmission data, and then sends the optical transmission data to the digital signal processing process 823.

Thirdly, after the digital signal processing process 823 receives the optical transmission data sent by the client process 822, the digital signal processing process 823 converts the optical transmission data into a baseband signal, and then sends the baseband signal to the digital-to-analog converter 824.

Then, after the digital-to-analog converter 824 receives the baseband signal sent by the digital signal processing process 823, the digital-to-analog converter 824 converts the baseband signal into an analog signal, and then separately sends the analog signal to a master device 200 and the measurement module 825. When the measurement module 825 receives the analog signal sent by the digital-to-analog converter 824, the measurement module 825 records a second timestamp T2, where the second timestamp T2 is used to indicate a timestamp at which the analog signal leaves the optical module 82.

Finally, the measurement module 825 obtains the first timestamp T1 at which the client service data enters the optical module 82 and the second timestamp T2 at which the analog signal leaves the optical module 82. The measurement module 825 calculates a difference between the second timestamp T2 and the first timestamp T1, to obtain a sending latency of the optical module 82.

A process in which the measurement module 825 calculates a receiving latency of the optical module 82 is the same as a principle in which the measurement module 825 calculates the sending latency of the optical module 82. The measurement module 825 needs to record a timestamp at which data enters the optical module 82 and a timestamp at which data leaves the optical module 82, and calculate a difference between the time at which the data leaves the optical module 82 and the time at which the data enters the optical module 82, to obtain the receiving latency of the optical module 82.

Certainly, a structure of the slave device 82 shown in FIG. 18 is merely a specific implementation, the slave device 82 may alternatively have other types of structures, and the structures of the slave device 82 are not limited to the embodiment shown in FIG. 18.

In addition, the measurement module 825 shown in FIG. 18 is disposed inside the optical module 82, or the measurement module 825 may be disposed outside the optical module 82.

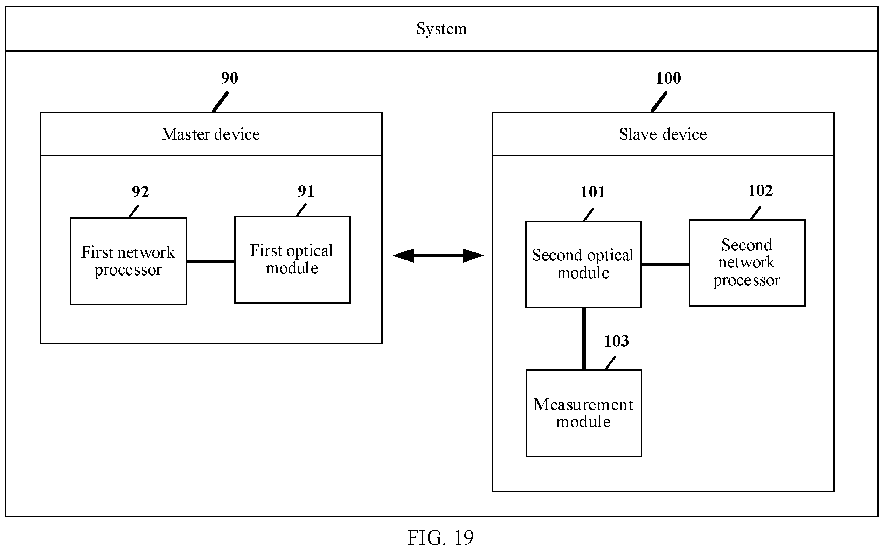

FIG. 19 is a schematic diagram of a system according to an embodiment of this application. The system shown in FIG. 19 includes a master device 90 and a slave device 100. The slave device 100 needs to be synchronized with the master device 90. The master device 90 includes a first optical module 91 and a first network processor 92, and the slave device 100 includes a second optical module 101, a second network processor 102, and a measurement module 103.

In the embodiment shown in FIG. 19, the measurement module 103 is configured to calculate a first unidirectional latency, where the first unidirectional latency is used to indicate a sum of a sending latency of the first optical module 91 and a receiving latency of the second optical module 101; the measurement module 103 is further configured to calculate a second unidirectional latency, where the second unidirectional latency is used to indicate a sum of a sending latency of the second optical module 101 and a receiving latency of the first optical module 91; the measurement module 103 is further configured to calculate a difference between the first unidirectional latency and the second unidirectional latency to obtain a bidirectional latency difference; and the measurement module 103 is further configured to calculate a time offset between the slave device 100 and the master device 90 based on the bidirectional latency difference, a first sending timestamp, a first receiving timestamp, a second sending timestamp, and a second receiving timestamp. The first sending timestamp is a timestamp that is recorded by the master device 90 and at which the first network processor 92 sends a synchronization packet. The first receiving timestamp is a timestamp that is recorded by the slave device 100 and at which the second network processor 102 receives the synchronization packet. The second sending timestamp is a timestamp that is recorded by the slave device 100 and at which the second network processor 102 sends a latency request packet. The second receiving timestamp is a timestamp that is recorded by the master device 90 and at which the first network processor 92 receives the latency request packet. The second network processor 102 is configured to adjust local time of the slave device 100 by using the time offset.

In an implementable embodiment, the measurement module 103 is specifically configured to: receive a first difference sent by the master device 90, where the first difference is a difference between a first timestamp and a second timestamp, and the first timestamp is a timestamp that is recorded by the master device 90 and at which the first optical module 91 receives first data, and the second timestamp is a timestamp that is recorded by the master device 90 and at which the first optical module 91 outputs second data; record a third timestamp at which the second optical module 101 receives the second data; record a fourth timestamp at which the second optical module 101 outputs the first data; calculate a difference between the fourth timestamp and the third timestamp to obtain a second difference; and calculate a difference between the second difference and the first difference to obtain the first unidirectional latency.

In an implementable embodiment, the measurement module 103 is specifically configured to: record a fifth timestamp at which the second optical module 101 receives third data; record a sixth timestamp at which the second optical module 101 outputs fourth data; calculate a difference between the fifth timestamp and the sixth timestamp to obtain a third difference; receive a fourth difference sent by the master device 90, where the fourth difference is a difference between an eighth timestamp and a seventh timestamp, the seventh timestamp is a timestamp that is recorded by the master device 90 and at which the first optical module 91 receives the fourth data, and the eighth timestamp is a timestamp that is recorded by the master device 90 and at which the first optical module 91 outputs the third data; and calculate a difference between the fourth difference and the third difference to obtain the second unidirectional latency.

In an implementable embodiment, the measurement module 103 is specifically configured to: receive a first difference sent by the master device 90, where the first difference is a difference between a first timestamp and a second timestamp, the first timestamp is a timestamp that is recorded by the master device 90 and at which the first optical module 91 receives first data, and the second timestamp is a timestamp that is recorded by the master device 90 and at which the first optical module 91 outputs the first data; record a third timestamp at which the second optical module 101 receives the first data; record a fourth timestamp at which the second optical module 101 outputs the first data; calculate a difference between the fourth timestamp and the third timestamp to obtain a second difference; and calculate a difference between the second difference and the first difference to obtain the first unidirectional latency.

In an implementable embodiment, the measurement module 103 is specifically configured to: record a fifth timestamp at which the second optical module 101 receives second data; record a sixth timestamp at which the second optical module 101 outputs the second data; calculate a difference between the fifth timestamp and the sixth timestamp to obtain a third difference; receive a fourth difference sent by the master device 90, where the fourth difference is a difference between an eighth timestamp and a seventh timestamp, the seventh timestamp is a timestamp that is recorded by the master device 90 and at which the first optical module 91 receives the second data, and the eighth timestamp is a timestamp that is recorded by the master device 90 and at which the first optical module 91 outputs the second data; and calculate a difference between the fourth difference and the third difference to obtain the second unidirectional latency.

In an implementable embodiment, the second network processor 102 is connected to the second optical module 101, and the second optical module 101 includes the measurement module 103. Alternatively, the second network processor 102, the second optical module 101, and the measurement module 103 are sequentially connected.

In an implementable embodiment, the measurement module 103 is specifically configured to calculate the time offset between the slave device 100 and the master device 90 according to [(t2 - 11) - (t4 - t3) - Δlatency] ÷ 2, where t1 is the first sending timestamp, t2 is the first receiving timestamp, t3 is the second sending timestamp, t4 is the second receiving timestamp, and Δlatency is the bidirectional latency difference.

It should be noted that, when a function implemented by software is related in the foregoing embodiments, related software or a module in the software may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible by a computer. The following provides an example but does not impose a limitation: The computer-readable medium may include a RAM, a ROM, an EEPROM, a CD-ROM or another compact disc storage, a magnetic disk storage medium or another magnetic storage device, or any other medium that can carry or store expected program code in a form of an instruction or a data structure and is accessible by a computer. In addition, any connection may be appropriately defined as a computer-readable medium. For example, if software is transmitted from a website, a server, or another remote source through a coaxial cable, an optical fiber/cable, a twisted pair, a digital subscriber line (DSL) or wireless technologies such as infrared, radio, and microwave, the coaxial cable, optical fiber/cable, twisted pair, DSL, or the wireless technologies such as infrared, radio, and microwave are included in fixation of a medium to which they belong. A disk (Disk) and a disc (disc) used in this application include a compact disc (CD), a laser disc, an optical disc, a digital versatile disc (DVD), a floppy disk, and a Blu-ray disc. The disk usually copies data in a magnetic manner, but the disc copies data optically through a laser. The foregoing combination shall also be included in a protection scope of the computer-readable medium.

## Claims

1. A time synchronization method, wherein the method is applied to a slave device (2), the slave device (2) is synchronized with a master device (1), the master device (1) comprises a first optical module (12) and a first network processor (11), the slave device (2) comprises a second optical module (22) and a second network processor (21), and the method comprises:
Calculating (S11), by the slave device (2), a first unidirectional latency, wherein the first unidirectional latency is used to indicate a sum of a sending latency of the first optical module (12) and a receiving latency of the second optical module (22);
Calculating (S12), by the slave device (2), a second unidirectional latency, wherein the second unidirectional latency is used to indicate a sum of a sending latency of the second optical module (22) and a receiving latency of the first optical module (12);
Calculating (S13), by the slave device (2), a difference between the first unidirectional latency and the second unidirectional latency to obtain a bidirectional latency difference;
Calculating (S14), by the slave device (2), a time offset between the slave device (2) and the master device (1) based on the bidirectional latency difference, a first sending timestamp, a first receiving timestamp, a second sending timestamp, and a second receiving timestamp, wherein the first sending timestamp is a timestamp that is recorded by the master device (1) and at which the first network processor (11) sends a synchronization packet, the first receiving timestamp is a timestamp that is recorded by the slave device (2) and at which the second network processor (21) receives the synchronization packet, the second sending timestamp is a timestamp that is recorded by the slave device (2) and at which the second network processor (21) sends a latency request packet, and the second receiving timestamp is a timestamp that is recorded by the master device (1) and at which the first network processor (11) receives the latency request packet; and
Adjusting (S15), by the slave device (2), local time of the slave device (2) by using the time offset;
wherein the calculating, by the slave device (2), a first unidirectional latency comprises:
receiving (S21), by the slave device (2), a first difference sent by the master device (1), wherein the first difference is a difference between a first timestamp and a second timestamp, the first timestamp is a timestamp that is recorded by the master device (1) and at which the first optical module (12) receives first data from the first network processor (11), and the second timestamp is a timestamp that is recorded by the master device (1) and at which the first optical module (12) outputs second data;
recording (S22), by the slave device (2), a third timestamp at which the second optical module (22) receives the second data;
recording (S23), by the slave device (2), a fourth timestamp at which the second optical module (22) outputs the first data to the second network processor (21);
calculating (S24), by the slave device (2), a difference between the fourth timestamp and the third timestamp to obtain a second difference; and
calculating (S25), by the slave device (2), a difference between the second difference and the first difference to obtain the first unidirectional latency;
or/and
wherein the calculating, by the slave device (2), a second unidirectional latency comprises:
Recording (S31), by the slave device (2), a fifth timestamp at which the second optical module (22) receives third data from the second network processor (21);
Recording (S32), by the slave device (2), a sixth timestamp at which the second optical module (22) outputs fourth data;
Calculating (S33), by the slave device (2), a difference between the fifth timestamp and the sixth timestamp to obtain a third difference;
Receiving (S34), by the slave device (2), a fourth difference sent by the master device (1), wherein the fourth difference is a difference between an eighth timestamp and a seventh timestamp, the seventh timestamp is a timestamp that is recorded by the master device (1) and at which the first optical module (12) receives the fourth data; and the eighth timestamp is a timestamp that is recorded by the master device (1) and at which the first optical module (12) outputs the third data to the first network processor (11); and
Calculating (S35), by the slave device (2), a difference between the fourth difference and the third difference to obtain the second unidirectional latency.

2. The time synchronization method according to claim 1, wherein the calculating, by the slave device (2), a time offset between the slave device (2) and the master device (1) based on the bidirectional latency difference, a first sending timestamp, a first receiving timestamp, a second sending timestamp, and a second receiving timestamp comprises:
calculating, by the slave device (2), the time offset between the slave device (2) and the master device (1) according to [(t2 - 11) - (t4 - t3) - Δlatency] ÷ 2, wherein
t1 is the first sending timestamp, t2 is the first receiving timestamp, t3 is the second sending timestamp, t4 is the second receiving timestamp, and Δlatency is the bidirectional latency difference.

3. A slave device (2), wherein the slave device (2) is synchronized with a master device (1), the master device (1) comprises a first network processor (11) and a first optical module (12), and the slave device (2) comprises a second network processor (21), a second optical module (22), and a measurement module (43,63), wherein
the measurement module (43,63) is configured to calculate a first unidirectional latency, wherein the first unidirectional latency is used to indicate a sum of a sending latency of the first optical module (12) and a receiving latency of the second optical module (22); the measurement module (43,63) is further configured to calculate a second unidirectional latency, wherein the second unidirectional latency is used to indicate a sum of a sending latency of the second optical module (22) and a receiving latency of the first optical module (12); the measurement module (43,63) is further configured to calculate a difference between the first unidirectional latency and the second unidirectional latency to obtain a bidirectional latency difference; the measurement module (43,63) is further configured to calculate a time offset between the slave device (2) and the master device (1) based on the bidirectional latency difference, a first sending timestamp, a first receiving timestamp, a second sending timestamp, and a second receiving timestamp, wherein the first sending timestamp is a timestamp that is recorded by the master device (1) and at which the first network processor (11) sends a synchronization packet, the first receiving timestamp is a timestamp recorded by the slave device (2) when the second network processor (21) receives the synchronization packet, the second sending timestamp is a timestamp that is recorded by the slave device (2) and at which the second network processor (21) sends a latency request packet, and the second receiving timestamp is a timestamp that is recorded by the master device (1) and at which the first network processor (11) receives the latency request packet; and
the second network processor (21) is configured to adjust local time of the slave device (2) by using the time offset;
wherein the measurement module (43,63) is specifically configured to: receive a first difference sent by the master device (1), wherein the first difference is a difference between a first timestamp and a second timestamp, the first timestamp is a timestamp that is recorded by the master device (1) and at which the first optical module (12) receives first data from the first network processor (11), and the second timestamp is a timestamp that is recorded by the master device (1) and at which the first optical module (12) outputs second data; record a third timestamp at which the second optical module (22) receives the second data; record a fourth timestamp at which the second optical module (22) outputs the first data to the second network processor (21); calculate a difference between the fourth timestamp and the third timestamp to obtain a second difference; and calculate a difference between the second difference and the first difference to obtain the first unidirectional latency;
or/and
wherein the measurement module (43,63) is specifically configured to: record a fifth timestamp at which the second optical module (22) receives third data from the second network processor (21); record a sixth timestamp at which the second optical module (22) outputs fourth data; calculate a difference between the fifth timestamp and the sixth timestamp to obtain a third difference; receive a fourth difference sent by the master device (1), wherein the fourth difference is a difference between an eighth timestamp and a seventh timestamp, the seventh timestamp is a timestamp that is recorded by the master device (1) and at which the first optical module (12) receives the fourth data, and the eighth timestamp is a timestamp that is recorded by the master device (1) and at which the first optical module (12) outputs the third data to the first network processor (11); and calculate a difference between the fourth difference and the third difference to obtain the second unidirectional latency.

4. A system, wherein the system comprises a master device (1) and a slave device (2), the slave device (2) is synchronized with the master device (1), the master device (1) comprises a first optical module (12) and a first network processor (11), and the slave device (2) comprises a second optical module (22), a second network processor (21), and a measurement module (43,63), wherein
the measurement module (43,63) is configured to calculate a first unidirectional latency, wherein the first unidirectional latency is used to indicate a sum of a sending latency of the first optical module (12) and a receiving latency of the second optical module (22); the measurement module (43,63) is further configured to calculate a second unidirectional latency, wherein the second unidirectional latency is used to indicate a sum of a sending latency of the second optical module (22) and a receiving latency of the first optical module (12); the measurement module (43,63) is further configured to calculate a difference between the first unidirectional latency and the second unidirectional latency to obtain a bidirectional latency difference; the measurement module (43,63) is further configured to calculate a time offset between the slave device (2) and the master device (1) based on the bidirectional latency difference, a first sending timestamp, a first receiving timestamp, a second sending timestamp, and a second receiving timestamp, wherein the first sending timestamp is a timestamp that is recorded by the master device (1) and at which the first network processor (11) sends a synchronization packet, the first receiving timestamp is a timestamp recorded by the slave device (2) when the second network processor (21) receives the synchronization packet, the second sending timestamp is a timestamp that is recorded by the slave device (2) and at which the second network processor (21) sends a latency request packet, and the second receiving timestamp is a timestamp that is recorded by the master device (1) and at which the first network processor (11) receives the latency request packet; and
the second network processor (21) is configured to adjust local time of the slave device (2) by using the time offset,
wherein the measurement module (43,63) is specifically configured to: receive a first difference sent by the master device (1), wherein the first difference is a difference between a first timestamp and a second timestamp, the first timestamp is a timestamp that is recorded by the master device (1) and at which the first optical module (12) receives first data from the first network processor (11), and the second timestamp is a timestamp that is recorded by the master device (1) and at which the first optical module (12) outputs second data; record a third timestamp at which the second optical module (22) receives the second data; record a fourth timestamp at which the second optical module (22) outputs the first data to the second network processor (21); calculate a difference between the fourth timestamp and the third timestamp to obtain a second difference; and calculate a difference between the second difference and the first difference to obtain the first unidirectional latency;
or/and
wherein the measurement module (43,63) is specifically configured to: record a fifth timestamp at which the second optical module (22) receives third data from the second network processor (21); record a sixth timestamp at which the second optical module (22) outputs fourth data; calculate a difference between the fifth timestamp and the sixth timestamp to obtain a third difference; receive a fourth difference sent by the master device (1), wherein the fourth difference is a difference between an eighth timestamp and a seventh timestamp, the seventh timestamp is a timestamp that is recorded by the master device (1) and at which the first optical module (12) receives the fourth data, and the eighth timestamp is a timestamp that is recorded by the master device (1) and at which the first optical module (12) outputs the third data to the first network processor (11); and calculate a difference between the fourth difference and the third difference to obtain the second unidirectional latency.

## Patentansprüche

1. Zeitsynchronisierungsverfahren, wobei das Verfahren auf eine Slave-Vorrichtung (2) angewendet wird, die Slave-Vorrichtung (2) mit einer Master-Vorrichtung (1) synchronisiert wird, die Master-Vorrichtung (1) ein erstes optisches Modul (12) und einen ersten Netzwerkprozessor (11) umfasst, die Slave-Vorrichtung (2) ein zweites optisches Modul (22) und einen zweiten Netzwerkprozessor (21) umfasst, und das Verfahren Folgendes umfasst:
Berechnen (S11) einer ersten unidirektionalen Latenz durch die Slave-Vorrichtung (2), wobei die erste unidirektionale Latenz verwendet wird, um eine Summe einer Sendelatenz des ersten optischen Moduls (12) und einer Empfangslatenz des zweiten optischen Moduls (22) anzuzeigen;
Berechnen (S12) einer zweiten unidirektionalen Latenz durch die Slave-Vorrichtung (2), wobei die zweite unidirektionale Latenz verwendet wird, um eine Summe einer Sendelatenz des zweiten optischen Moduls (22) und einer Empfangslatenz des ersten optischen Moduls (12) anzuzeigen;
Berechnen (S13) einer Differenz zwischen der ersten unidirektionalen Latenz und der zweiten unidirektionalen Latenz durch die Slave-Vorrichtung (2), um eine bidirektionale Latenzdifferenz zu erlangen;
Berechnen (S14) eines Zeitversatzes zwischen der Slave-Vorrichtung (2) und der Master-Vorrichtung (1) durch die Slave-Vorrichtung (2) basierend auf der bidirektionalen Latenzdifferenz, einem ersten Sendezeitstempel, einem ersten Empfangszeitstempel, einem zweiten Sendezeitstempel und einem zweiten Empfangszeitstempel, wobei der erste Sendezeitstempel ein Zeitstempel ist, der durch die Master-Vorrichtung (1) aufgezeichnet wird und bei welchem der erste Netzwerkprozessor (11) ein Synchronisierungspaket sendet, der erste Empfangszeitstempel ein Zeitstempel ist, der durch die Slave-Vorrichtung (2) aufgezeichnet wird und bei welchem der zweite Netzwerkprozessor (21) das Synchronisierungspaket empfängt, der zweite Sendezeitstempel ein Zeitstempel ist, der durch die Slave-Vorrichtung (2) aufgezeichnet wird und bei welchem der zweite Netzwerkprozessor (21) ein Latenzanforderungspaket sendet, und der zweite Empfangszeitstempel ein Zeitstempel ist, der durch die Master-Vorrichtung (1) aufgezeichnet wird und bei welchem der erste Netzwerkprozessor (11) das Latenzanforderungspaket empfängt; und
Einstellen (S15) der lokalen Zeit der Slave-Vorrichtung (2) durch die Slave-Vorrichtung (2) unter Verwendung des Zeitversatzes;
wobei das Berechnen einer ersten unidirektionalen Latenz durch die Slave-Vorrichtung (2) Folgendes umfasst:
Empfangen (S21) einer ersten Differenz, die durch die Master-Vorrichtung (1) gesendet wurde, durch die Slave-Vorrichtung (2), wobei die erste Differenz eine Differenz zwischen einem ersten Zeitstempel und einem zweiten Zeitstempel ist, der erste Zeitstempel ein Zeitstempel ist, der durch die Master-Vorrichtung (1) aufgezeichnet wird und bei welchem das erste optische Modul (12) erste Daten von dem ersten Netzwerkprozessor (11) empfängt, und der zweite Zeitstempel ein Zeitstempel ist, der durch die Master-Vorrichtung (1) aufgezeichnet wird und bei welchem das erste optische Modul (12) zweite Daten ausgibt;
Aufzeichnen (S22) eines dritten Zeitstempels, bei welchem das zweite optische Modul (22) die zweiten Daten empfängt, durch die Slave-Vorrichtung (2);
Aufzeichnen (S23) eines vierten Zeitstempels, bei welchem das zweite optische Modul (22) die ersten Daten an den zweiten Netzwerkprozessor (21) ausgibt, durch die Slave-Vorrichtung (2); Berechnen (S24) einer Differenz zwischen dem vierten Zeitstempel und dem dritten Zeitstempel durch die Slave-Vorrichtung (2), um eine zweite Differenz zu erlangen; und
Berechnen (S25) einer Differenz zwischen der zweiten Differenz und der ersten Differenz durch die Slave-Vorrichtung (2), um die erste unidirektionale Latenz zu erlangen;
oder/und
wobei das Berechnen einer zweiten unidirektionalen Latenz durch die Slave-Vorrichtung (2) Folgendes umfasst:
Aufzeichnen (S31) eines fünften Zeitstempels, bei welchem das zweite optische Modul (22) die dritten Daten von dem zweiten Netzwerkprozessor (21) empfängt, durch die Slave-Vorrichtung (2) ;
Aufzeichnen (S32) eines sechsten Zeitstempels, bei welchem das zweite optische Modul (22) die vierten Daten ausgibt, durch die Slave-Vorrichtung (2);
Berechnen (S33) einer Differenz zwischen dem fünften Zeitstempel und dem sechsten Zeitstempel durch die Slave-Vorrichtung (2), um eine dritte Differenz zu erlangen; und
Empfangen (S34) einer vierten Differenz, die durch die Master-Vorrichtung (1) gesendet wurde, durch die Slave-Vorrichtung (2), wobei die vierte Differenz eine Differenz zwischen einem achten Zeitstempel und einem siebten Zeitstempel ist, der siebte Zeitstempel ein Zeitstempel ist, der durch die Master-Vorrichtung (1) aufgezeichnet wird und bei welchem das erste optische Modul (12) die vierten Daten empfängt; und der achte Zeitstempel ein Zeitstempel ist, der durch die Master-Vorrichtung (1) aufgezeichnet wird und bei welchem das erste optische Modul (12) die dritten Daten an den ersten Netzwerkprozessor (11) ausgibt; und
Berechnen (S35) einer Differenz zwischen der vierten Differenz und der dritten Differenz durch die Slave-Vorrichtung (2), um die zweite unidirektionale Latenz zu erlangen.

2. Zeitsynchronisierungsverfahren nach Anspruch 1, wobei das Berechnen eines Zeitversatzes zwischen der Slave-Vorrichtung (2) und der Master-Vorrichtung (1) durch die Slave-Vorrichtung (2) basierend auf der bidirektionalen Latenzdifferenz, einem ersten Sendezeitstempel, einem ersten Empfangszeitstempel, einem zweiten Sendezeitstempel und einem zweiten Empfangszeitstempel Folgendes umfasst:
Berechnen des Zeitversatzes zwischen der Slave-Vorrichtung (2) und der Master-Vorrichtung (1) durch die Slave-Vorrichtung (2) gemäß [(t2 - t1) - (t4 - t3) - ΔLatenz] - 2, wobei
t1 der erste Sendezeitstempel ist, t2 der erste Empfangszeitstempel ist, t3 der zweite Sendezeitstempel ist, t4 der zweite Empfangszeitstempel ist und ΔLatenz die bidirektionale Latenzdifferenz ist.

3. Slave-Vorrichtung (2), wobei die Slave-Vorrichtung (2) mit einer Master-Vorrichtung (1) synchronisiert ist, die Master-Vorrichtung (1) einen ersten Netzwerkprozessor (11) und ein erstes optisches Modul (12) umfasst und die Slave-Vorrichtung (2) einen zweiten Netzwerkprozessor (21), ein zweites optisches Modul (22) und ein Messmodul (43,63) umfasst, wobei
das Messmodul (43,63) dazu konfiguriert ist, eine erste unidirektionale Latenz zu berechnen, wobei die erste unidirektionale Latenz verwendet wird, um eine Summe aus einer Sendelatenz des ersten optischen Moduls (12) und einer Empfangslatenz des zweiten optischen Moduls (22) anzuzeigen; das Messmodul (43,63) ferner dazu konfiguriert ist, eine zweite unidirektionale Latenz zu berechnen, wobei die zweite unidirektionale Latenz verwendet wird, um eine Summe aus einer Sendelatenz des zweiten optischen Moduls (22) und einer Empfangslatenz des ersten optischen Moduls (12) anzuzeigen; das Messmodul (43,63) ferner dazu konfiguriert ist, eine Differenz zwischen der ersten unidirektionalen Latenz und der zweiten unidirektionalen Latenz zu berechnen, um eine bidirektionale Latenzdifferenz zu erlangen; das Messmodul (43,63) ferner dazu konfiguriert ist, einen Zeitversatz zwischen der Slave-Vorrichtung (2) und der Master-Vorrichtung (1) basierend auf der bidirektionalen Latenzdifferenz, einem ersten Sendezeitstempel, einem ersten Empfangszeitstempel, einem zweiten Sendezeitstempel und einem zweiten Empfangszeitstempel zu berechnen, wobei der erste Sendezeitstempel ein Zeitstempel ist, der durch die Master-Vorrichtung (1) aufgezeichnet wird und bei welchem der erste Netzwerkprozessor (11) ein Synchronisierungspaket sendet, der erste Empfangszeitstempel ein Zeitstempel ist, der durch die Slave-Vorrichtung (2) aufgezeichnet wird, wenn der zweite Netzwerkprozessor (21) das Synchronisierungspaket empfängt, der zweite Sendezeitstempel ein Zeitstempel ist, der durch die Slave-Vorrichtung (2) aufgezeichnet wird und bei welchem der zweite Netzwerkprozessor (21) ein Latenzanforderungspaket sendet, und der zweite Empfangszeitstempel ein Zeitstempel ist, der durch die Master-Vorrichtung (1) aufgezeichnet wird und bei welchem der erste Netzwerkprozessor (11) das Latenzanforderungspaket empfängt; und
der zweite Netzwerkprozessor (21) dazu konfiguriert ist, die lokale Zeit der Slave-Vorrichtung (2) unter Verwendung des Zeitversatzes einzustellen;
wobei das Messmodul (43,63) speziell dazu konfiguriert ist: eine durch die Master-Vorrichtung (1) gesendete erste Differenz zu empfangen, wobei die erste Differenz eine Differenz zwischen einem ersten Zeitstempel und einem zweiten Zeitstempel ist, der erste Zeitstempel ein Zeitstempel ist, der durch die Master-Vorrichtung (1) aufgezeichnet wird und bei welchem das erste optische Modul (12) erste Daten von dem ersten Netzwerkprozessor (11) empfängt, und der zweite Zeitstempel ein Zeitstempel ist, der durch die Master-Vorrichtung (1) aufgezeichnet wird und bei welchem das erste optische Modul (12) zweite Daten ausgibt; einen dritten Zeitstempel aufzuzeichnen, bei welchem das zweite optische Modul (22) die zweiten Daten empfängt; einen vierten Zeitstempel aufzuzeichnen, bei welchem das zweite optische Modul (22) die ersten Daten an den zweiten Netzwerkprozessor (21) ausgibt; eine Differenz zwischen dem vierten Zeitstempel und dem dritten Zeitstempel zu berechnen, um eine zweite Differenz zu erlangen; und eine Differenz zwischen der zweiten Differenz und der ersten Differenz zu berechnen, um die erste unidirektionale Latenz zu erlangen;
oder/und
wobei das Messmodul (43,63) speziell dazu konfiguriert ist: einen fünften Zeitstempel aufzuzeichnen, bei welchem das zweite optische Modul (22) dritte Daten von dem zweiten Netzwerkprozessor (21) empfängt; einen sechsten Zeitstempel aufzuzeichnen, bei welchem das zweite optische Modul (22) vierte Daten ausgibt; eine Differenz zwischen dem fünften Zeitstempel und dem sechsten Zeitstempel zu berechnen, um eine dritte Differenz zu erlangen; eine durch die Master-Vorrichtung (1) gesendete vierte Differenz zu empfangen, wobei die vierte Differenz eine Differenz zwischen einem achten Zeitstempel und einem siebten Zeitstempel ist, der siebte Zeitstempel ein Zeitstempel ist, der durch die Master-Vorrichtung (1) aufgezeichnet wird und bei welchem das erste optische Modul (12) die vierten Daten empfängt, und der achte Zeitstempel ein Zeitstempel ist, der durch die Master-Vorrichtung (1) aufgezeichnet wird und bei welchem das erste optische Modul (12) die dritten Daten an den ersten Netzwerkprozessor (11) ausgibt; und eine Differenz zwischen der vierten Differenz und der dritten Differenz zu berechnen, um die zweite unidirektionale Latenz zu erlangen.

4. System, wobei das System eine Master-Vorrichtung (1) und eine Slave-Vorrichtung (2) umfasst, wobei die Slave-Vorrichtung (2) mit der Master-Vorrichtung (1) synchronisiert ist, die Master-Vorrichtung (1) ein erstes optisches Modul (12) und einen ersten Netzwerkprozessor (11) umfasst und die Slave-Vorrichtung (2) ein zweites optisches Modul (22), einen zweiten Netzwerkprozessor (21) und ein Messmodul (43,63) umfasst, wobei das Messmodul (43,63) dazu konfiguriert ist, eine erste unidirektionale Latenz zu berechnen, wobei die erste unidirektionale Latenz verwendet wird, um eine Summe aus einer Sendelatenz des ersten optischen Moduls (12) und einer Empfangslatenz des zweiten optischen Moduls (22) anzuzeigen; das Messmodul (43,63) ferner dazu konfiguriert ist, eine zweite unidirektionale Latenz zu berechnen, wobei die zweite unidirektionale Latenz verwendet wird, um eine Summe aus einer Sendelatenz des zweiten optischen Moduls (22) und einer Empfangslatenz des ersten optischen Moduls (12) anzuzeigen; das Messmodul (43,63) ferner dazu konfiguriert ist, eine Differenz zwischen der ersten unidirektionalen Latenz und der zweiten unidirektionalen Latenz zu berechnen, um eine bidirektionale Latenzdifferenz zu erlangen; das Messmodul (43,63) ferner dazu konfiguriert ist, einen Zeitversatz zwischen der Slave-Vorrichtung (2) und der Master-Vorrichtung (1) basierend auf der bidirektionalen Latenzdifferenz, einem ersten Sendezeitstempel, einem ersten Empfangszeitstempel, einem zweiten Sendezeitstempel und einem zweiten Empfangszeitstempel zu berechnen, wobei der erste Sendezeitstempel ein Zeitstempel ist, der durch die Master-Vorrichtung (1) aufgezeichnet wird und bei welchem der erste Netzwerkprozessor (11) ein Synchronisierungspaket sendet, der erste Empfangszeitstempel ein Zeitstempel ist, der durch die Slave-Vorrichtung (2) aufgezeichnet wird, wenn der zweite Netzwerkprozessor (21) das Synchronisierungspaket empfängt, der zweite Sendezeitstempel ein Zeitstempel ist, der durch die Slave-Vorrichtung (2) aufgezeichnet wird und bei welchem der zweite Netzwerkprozessor (21) ein Latenzanforderungspaket sendet, und der zweite Empfangszeitstempel ein Zeitstempel ist, der durch die Master-Vorrichtung (1) aufgezeichnet wird und bei welchem der erste Netzwerkprozessor (11) das Latenzanforderungspaket empfängt; und
der zweite Netzwerkprozessor (21) dazu konfiguriert ist, die lokale Zeit der Slave-Vorrichtung (2) unter Verwendung des Zeitversatzes einzustellen,
wobei das Messmodul (43,63) speziell dazu konfiguriert ist: eine durch die Master-Vorrichtung (1) gesendete erste Differenz zu empfangen, wobei die erste Differenz eine Differenz zwischen einem ersten Zeitstempel und einem zweiten Zeitstempel ist, der erste Zeitstempel ein Zeitstempel ist, der durch die Master-Vorrichtung (1) aufgezeichnet wird und bei welchem das erste optische Modul (12) erste Daten von dem ersten Netzwerkprozessor (11) empfängt, und der zweite Zeitstempel ein Zeitstempel ist, der durch die Master-Vorrichtung (1) aufgezeichnet wird und bei welchem das erste optische Modul (12) zweite Daten ausgibt; einen dritten Zeitstempel aufzuzeichnen, bei welchem das zweite optische Modul (22) die zweiten Daten empfängt; einen vierten Zeitstempel aufzuzeichnen, bei welchem das zweite optische Modul (22) die ersten Daten an den zweiten Netzwerkprozessor (21) ausgibt; eine Differenz zwischen dem vierten Zeitstempel und dem dritten Zeitstempel zu berechnen, um eine zweite Differenz zu erlangen; und eine Differenz zwischen der zweiten Differenz und der ersten Differenz zu berechnen, um die erste unidirektionale Latenz zu erlangen;
oder/und
wobei das Messmodul (43,63) speziell dazu konfiguriert ist: einen fünften Zeitstempel aufzuzeichnen, bei welchem das zweite optische Modul (22) dritte Daten von dem zweiten Netzwerkprozessor (21) empfängt; einen sechsten Zeitstempel aufzuzeichnen, bei welchem das zweite optische Modul (22) vierte Daten ausgibt; eine Differenz zwischen dem fünften Zeitstempel und dem sechsten Zeitstempel zu berechnen, um eine dritte Differenz zu erlangen; eine durch die Master-Vorrichtung (1) gesendete vierte Differenz zu empfangen, wobei die vierte Differenz eine Differenz zwischen einem achten Zeitstempel und einem siebten Zeitstempel ist, der siebte Zeitstempel ein Zeitstempel ist, der durch die Master-Vorrichtung (1) aufgezeichnet wird und bei welchem das erste optische Modul (12) die vierten Daten empfängt, und der achte Zeitstempel ein Zeitstempel ist, der durch die Master-Vorrichtung (1) aufgezeichnet wird und bei welchem das erste optische Modul (12) die dritten Daten an den ersten Netzwerkprozessor (11) ausgibt; und eine Differenz zwischen der vierten Differenz und der dritten Differenz zu berechnen, um die zweite unidirektionale Latenz zu erlangen.

## Revendications

1. Procédé de synchronisation temporelle, dans lequel le procédé est appliqué à un dispositif esclave (2), le dispositif esclave (2) est synchronisé avec un dispositif maître (1), le dispositif maître (1) comprend un premier module optique (12) et un premier processeur de réseau (11), le dispositif esclave (2) comprend un second module optique (22) et un second processeur de réseau (21), et le procédé comprend :
le fait de calculer (S11), par le dispositif esclave (2), une première latence unidirectionnelle, dans lequel la première latence unidirectionnelle est utilisée pour indiquer une somme d'une latence d'envoi du premier module optique (12) et une latence de réception du second module optique (22) ;
le fait de calculer (S12), par le dispositif esclave (2), une seconde latence unidirectionnelle, dans lequel la seconde latence unidirectionnelle est utilisée pour indiquer une somme d'une latence d'envoi du second module optique (22) et une latence de réception du premier module optique (12) ;
le fait de calculer (S13), par le dispositif esclave (2), une différence entre la première latence unidirectionnelle et la seconde latence unidirectionnelle pour obtenir une différence de latence bidirectionnelle ;
le fait de calculer (S14), par le dispositif esclave (2), un décalage temporel entre le dispositif esclave (2) et le dispositif maître (1) à partir de la différence de latence bidirectionnelle, d'un premier horodatage d'envoi, d'un premier horodatage de réception, d'un second horodatage d'envoi et d'un second horodatage de réception, dans lequel le premier horodatage d'envoi est un horodatage qui est enregistré par le dispositif maître (1) et auquel le premier processeur de réseau (11) envoie un paquet de synchronisation, le premier horodatage de réception est un horodatage qui est enregistré par le dispositif esclave (2) et auquel le second processeur de réseau (21) reçoit le paquet de synchronisation, le second horodatage d'envoi est un horodatage qui est enregistré par le dispositif esclave (2) et auquel le second processeur de réseau (21) envoie un paquet de demande de latence, et le second horodatage de réception est un horodatage qui est enregistré par le dispositif maître (1) et auquel le premier processeur de réseau (11) reçoit le paquet de demande de latence ; et
le fait de régler (S15), par le dispositif esclave (2), l'heure locale du dispositif esclave (2) en utilisant le décalage temporel ;
dans lequel le calcul, par le dispositif esclave (2), d'une première latence unidirectionnelle comprend :
le fait de recevoir (S21), par le dispositif esclave (2), une première différence envoyée par le dispositif maître (1), dans lequel la première différence est une différence entre un premier horodatage et un deuxième horodatage, le premier horodatage est un horodatage qui est enregistré par le dispositif maître (1) et auquel le premier module optique (12) reçoit des premières données du premier processeur de réseau (11), et le deuxième horodatage est un horodatage qui est enregistré par le dispositif maître (1) et auquel le premier module optique (12) délivre des deuxièmes données ;
le fait d'enregistrer (S22), par le dispositif esclave (2), un troisième horodatage auquel le second module optique (22) reçoit les deuxièmes données ;
le fait d'enregistrer (S23), par le dispositif esclave (2), un quatrième horodatage auquel le second module optique (22) délivre les premières données au second processeur de réseau (21) ;
le fait de calculer (S24), par le dispositif esclave (2), une différence entre le quatrième horodatage et le troisième horodatage pour obtenir une deuxième différence ; et
le fait de calculer (S25), par le dispositif esclave (2), une différence entre la deuxième différence et la première différence pour obtenir la première latence unidirectionnelle ;
ou/et
dans lequel le calcul, par le dispositif esclave (2), d'une seconde latence unidirectionnelle comprend :
le fait d'enregistrer (S31), par le dispositif esclave (2), un cinquième horodatage auquel le second module optique (22) reçoit des troisièmes données du second processeur de réseau (21) ;
le fait d'enregistrer (S32), par le dispositif esclave (2), un sixième horodatage auquel le second module optique (22) délivre des quatrièmes données ;
le fait de calculer (S33), par le dispositif esclave (2), une différence entre le cinquième horodatage et le sixième horodatage pour obtenir une troisième différence ;
le fait de recevoir (S34), par le dispositif esclave (2), une quatrième différence envoyée par le dispositif maître (1), dans lequel la quatrième différence est une différence entre un huitième horodatage et un septième horodatage, le septième horodatage est un horodatage qui est enregistré par le dispositif maître (1) et auquel le premier module optique (12) reçoit les quatrièmes données ; et le huitième horodatage est un horodatage qui est enregistré par le dispositif maître (1) et auquel le premier module optique (12) délivre les troisièmes données au premier processeur de réseau (11) ; et
le fait de calculer (S35), par le dispositif esclave (2), une différence entre la quatrième différence et la troisième différence pour obtenir la seconde latence unidirectionnelle.

2. Procédé de synchronisation temporelle selon la revendication 1, dans lequel le calcul, par le dispositif esclave (2), d'un décalage temporel entre le dispositif esclave (2) et le dispositif maître (1) à partir de la différence de latence bidirectionnelle, d'un premier horodatage d'envoi, d'un premier horodatage de réception, d'un second horodatage d'envoi et d'un second horodatage de réception comprend :
le fait de calculer, par le dispositif esclave (2), le décalage temporel entre le dispositif esclave (2) et le dispositif maître (1) selon [(t2 - t1) - (t4 - t3) - Δlatence] ÷ 2, dans lequel t1 est le premier horodatage d'envoi, t2 est le premier horodatage de réception, t3 est le second horodatage d'envoi, t4 est le second horodatage de réception et Δlatence est la différence de latence bidirectionnelle.

3. Dispositif esclave (2), dans lequel le dispositif esclave (2) est synchronisé avec un dispositif maître (1), le dispositif maître (1) comprend un premier processeur de réseau (11) et un premier module optique (12), et le dispositif esclave (2) comprend un second processeur de réseau (21), un second module optique (22) et un module de mesure (43, 63), dans lequel le module de mesure (43, 63) est configuré pour calculer une première latence unidirectionnelle, dans lequel la première latence unidirectionnelle est utilisée pour indiquer une somme d'une latence d'envoi du premier module optique (12) et d'une latence de réception du second module optique (22) ; le module de mesure (43, 63) est également configuré pour calculer une seconde latence unidirectionnelle, dans lequel la seconde latence unidirectionnelle est utilisée pour indiquer une somme d'une latence d'envoi du second module optique (22) et d'une latence de réception du premier module optique (12) ; le module de mesure (43, 63) est également configuré pour calculer une différence entre la première latence unidirectionnelle et la seconde latence unidirectionnelle pour obtenir une différence de latence bidirectionnelle ; le module de mesure (43, 63) est également configuré pour calculer un décalage temporel entre le dispositif esclave (2) et le dispositif maître (1) à partir de la différence de latence bidirectionnelle, d'un premier horodatage d'envoi, d'un premier horodatage de réception, d'un second horodatage d'envoi et d'un second horodatage de réception, dans lequel le premier horodatage d'envoi est un horodatage qui est enregistré par le dispositif maître (1) et auquel le premier processeur de réseau (11) envoie un paquet de synchronisation, le premier horodatage de réception est un horodatage enregistré par le dispositif esclave (2) lorsque le second processeur de réseau (21) reçoit le paquet de synchronisation, le second horodatage d'envoi est un horodatage qui est enregistré par le dispositif esclave (2) et auquel le second processeur de réseau (21) envoie un paquet de demande de latence, et le second horodatage de réception est un horodatage qui est enregistré par le dispositif maître (1) et auquel le premier processeur de réseau (11) reçoit le paquet de demande de latence ; et
le second processeur de réseau (21) est configuré pour régler l'heure locale du dispositif esclave (2) en utilisant le décalage temporel ;
dans lequel le module de mesure (43, 63) est spécifiquement configuré pour : recevoir une première différence envoyée par le dispositif maître (1), dans lequel la première différence est une différence entre un premier horodatage et un deuxième horodatage, le premier horodatage est un horodatage qui est enregistré par le dispositif maître (1) et auquel le premier module optique (12) reçoit des premières données du premier processeur de réseau (11), et le deuxième horodatage est un horodatage qui est enregistré par le dispositif maître (1) et auquel le premier module optique (12) délivre des deuxièmes données ; enregistrer un troisième horodatage auquel le second module optique (22) reçoit les deuxièmes données ; enregistrer un quatrième horodatage auquel le second module optique (22) délivre les premières données au second processeur de réseau (21) ; calculer une différence entre le quatrième horodatage et le troisième horodatage pour obtenir une deuxième différence ; et calculer une différence entre la deuxième différence et la première différence pour obtenir la première latence unidirectionnelle ;
ou/et
dans lequel le module de mesure (43, 63) est spécifiquement configuré pour : enregistrer un cinquième horodatage auquel le second module optique (22) reçoit des troisièmes données du second processeur de réseau (21) ; enregistrer un sixième horodatage auquel le second module optique (22) délivre des quatrièmes données ; calculer une différence entre le cinquième horodatage et le sixième horodatage pour obtenir une troisième différence ; recevoir une quatrième différence envoyée par le dispositif maître (1), dans lequel la quatrième différence est une différence entre un huitième horodatage et un septième horodatage, le septième horodatage est un horodatage enregistré par le dispositif maître (1) et auquel le premier module optique (12) reçoit les quatrièmes données, et le huitième horodatage est un horodatage enregistré par le dispositif maître (1) et auquel le premier module optique (12) délivre les troisièmes données au premier processeur de réseau (11) ; et calculer une différence entre la quatrième différence et la troisième différence pour obtenir la seconde latence unidirectionnelle.

4. Système, dans lequel le système comprend un dispositif maître (1) et un dispositif esclave (2), le dispositif esclave (2) est synchronisé avec le dispositif maître (1), le dispositif maître (1) comprend un premier module optique (12) et un premier processeur de réseau (11), et le dispositif esclave (2) comprend un second module optique (22), un second processeur de réseau (21) et un module de mesure (43, 63), dans lequel
le module de mesure (43, 63) est configuré pour calculer une première latence unidirectionnelle, dans lequel la première latence unidirectionnelle est utilisée pour indiquer une somme d'une latence d'envoi du premier module optique (12) et d'une latence de réception du second module optique (22) ; le module de mesure (43, 63) est également configuré pour calculer une seconde latence unidirectionnelle, dans lequel la seconde latence unidirectionnelle est utilisée pour indiquer une somme d'une latence d'envoi du second module optique (22) et d'une latence de réception du premier module optique (12) ; le module de mesure (43, 63) est également configuré pour calculer une différence entre la première latence unidirectionnelle et la seconde latence unidirectionnelle pour obtenir une différence de latence bidirectionnelle ; le module de mesure (43, 63) est également configuré pour calculer un décalage temporel entre le dispositif esclave (2) et le dispositif maître (1) à partir de la différence de latence bidirectionnelle, d'un premier horodatage d'envoi, d'un premier horodatage de réception, d'un second horodatage d'envoi et d'un second horodatage de réception, dans lequel le premier horodatage d'envoi est un horodatage qui est enregistré par le dispositif maître (1) et auquel le premier processeur de réseau (11) envoie un paquet de synchronisation, le premier horodatage de réception est un horodatage enregistré par le dispositif esclave (2) lorsque le second processeur de réseau (21) reçoit le paquet de synchronisation, le second horodatage d'envoi est un horodatage qui est enregistré par le dispositif esclave (2) et auquel le second processeur de réseau (21) envoie un paquet de demande de latence, et le second horodatage de réception est un horodatage qui est enregistré par le dispositif maître (1) et auquel le premier processeur de réseau (11) reçoit le paquet de demande de latence ; et
le second processeur de réseau (21) est configuré pour régler l'heure locale du dispositif esclave (2) en utilisant le décalage temporel,
dans lequel le module de mesure (43, 63) est spécifiquement configuré pour : recevoir une première différence envoyée par le dispositif maître (1), dans lequel la première différence est une différence entre un premier horodatage et un deuxième horodatage, le premier horodatage est un horodatage qui est enregistré par le dispositif maître (1) et auquel le premier module optique (12) reçoit des premières données du premier processeur de réseau (11), et le deuxième horodatage est un horodatage qui est enregistré par le dispositif maître (1) et auquel le premier module optique (12) délivre des deuxièmes données ; enregistrer un troisième horodatage auquel le second module optique (22) reçoit les deuxièmes données ; enregistrer un quatrième horodatage auquel le second module optique (22) délivre les premières données au second processeur de réseau (21) ; calculer une différence entre le quatrième horodatage et le troisième horodatage pour obtenir une deuxième différence ; et calculer une différence entre la deuxième différence et la première différence pour obtenir la première latence unidirectionnelle ;
ou/et
dans lequel le module de mesure (43, 63) est spécifiquement configuré pour : enregistrer un cinquième horodatage auquel le second module optique (22) reçoit des troisièmes données du second processeur de réseau (21) ; enregistrer un sixième horodatage auquel le second module optique (22) délivre des quatrièmes données ; calculer une différence entre le cinquième horodatage et le sixième horodatage pour obtenir une troisième différence ; recevoir une quatrième différence envoyée par le dispositif maître (1), dans lequel la quatrième différence est une différence entre un huitième horodatage et un septième horodatage, le septième horodatage est un horodatage enregistré par le dispositif maître (1) et auquel le premier module optique (12) reçoit les quatrièmes données, et le huitième horodatage est un horodatage enregistré par le dispositif maître (1) et auquel le premier module optique (12) délivre les troisièmes données au premier processeur de réseau (11) ; et calculer une différence entre la quatrième différence et la troisième différence pour obtenir la seconde latence unidirectionnelle.
